# EUROPÄISCHE PATENTSCHRIFT

(11) **EP 1 070 225 B1**
(45) Veröffentlichungstag und Bekanntmachung des Hinweises auf die Patenterteilung: **24.08.2005**
(21) Anmeldenummer: 99908661.4
(22) Anmeldetag: 09.03.1999
(51) Int. Cl.: F41G 3/26, G11B 27/32

(54) **EMPFANGSEINHEIT, VORRICHTUNG UND ANLAGE ZUR ERMITTLUNG DER LAGE UND/ODER BEWEGUNG EINER WAFFE SOWIE VERFAHREN HIERFÜR**
RECEIVING UNIT, DEVICE AND SYSTEM FOR DETERMINING THE POSITION OR MOVEMENT OF A WEAPON, AND A METHOD THEREFOR
UNITE DE RECEPTION, DISPOSITIF ET INSTALLATION POUR LA DETERMINATION DE LA POSITION OU DU MOUVEMENT D'UNE ARME, AINSI QUE PROCEDE CORRESPONDANT

(30) Priorität: 13.03.1998 AT 45998; 19.06.1998 AT 105898
(43) Veröffentlichungstag der Anmeldung: 24.01.2001
(73) Patentinhaber: Riener, Karl Stefan, 4563 Micheldorf (AT)
(72) Erfinder: Riener, Karl Stefan, 4563 Micheldorf (AT)
(74) Vertreter: Secklehner, Günter
(86) Internationale Anmeldenummer: PCT/AT1999/000061
(87) Internationale Veröffentlichungsnummer: WO 1999/047879

(56) Entgegenhaltungen:
- EP-A- 0 222 110
- EP-A- 0 285 586
- EP-A- 0 480 825
- EP-A- 0 728 503
- DE-A- 3 643 107
- US-A- 4 397 317
- US-A- 4 804 325
- US-A- 5 059 789
- US-A- 5 521 580

## Beschreibung

Die Erfindung betrifft eine Vorrichtung zur Ermittlung der räumlichen Lage und Bewegung einer Waffe, insbesondere Schußwaffe, mit einer Empfangseinheit die auf der Waffe angeordnet und zum Empfang von zumindest zwei auf die Waffe zugerichteten Strahlen einer bevorzugt im Bereich einer Zielscheibe angeordneten Sendeeinheit ausgebildet ist und durch einen zweidimensionalen positionsempfindlichen Sensor gebildet ist, mit dem die Auftreffstelle der aufeinanderfolgend einlangenden Strahlen auf einer Meßfläche des Sensors über eine Auswerteeinheit in zwei senkrecht zueinander verlaufenden Raumrichtungen feststellbar ist und eine Anlage zum Training des Gebrauchs und/oder der Handhabung von Waffen, insbesondere Schußwaffen, mit mehreren, insbesondere beweglichen Zielen.

Aus der EP 0 285 586 A2 ist eine Vorrichtung bekannt, mit welcher der Zielvorgang eines Schützen aufgezeichnet werden kann. Hierzu ist ein auf einer Schußwaffe oder auf einer waffenähnlichen Attrappe montierbarer Sensor vorgesehen. Dieser Sensor ist zur Erfassung der Lichtsignale, welche von im Zielbereich angeordneten, optischen Signalquellen abgegeben werden, ausgebildet. Die von diesem optoelektrischen Sensor bereitgestellten elektrischen Signale werden einer elektrischen Aufzeichnungseinheit zugeführt, in welcher die jeweiligen Daten gespeichert werden. Die elektrische Aufzeichnungseinheit wiederum ist mit einer Anzeigeeinheit zur Ausgabe der relevanten Daten in Tabellenform oder in graphischer Form auf einem Bildschirm oder auf Papier vorgesehen. Mit dieser Vorrichtung sollen sowohl Schußsimulationen als auch echte Schüsse mit scharfer Munition ausgeführt werden können.

Die EP 0 480 825 A2 beschreibt ein System zur Messung der Relativposition und Orientierung eines Körpers relativ zu einem sogenannten positionsempfindlichen Sensor. Insbesondere soll mit diesem System die Relativposition und Orientierung eines Pilotenhelmes mit mehreren Leuchtdioden (LED) in Bezug zu einer positionserfassenden Diode bzw. Einheit ermittelt werden. Zur Erzielung eines weitreichenden Erfassungsbereiches ist dem positionserfassenden Sensor eine optische Linsenanordnung zugeordnet. Der positionsempfindliche Sensor besteht dabei aus mehreren Halbleiterschichten und daran anschließenden Elektroden, welche mit einer Auswerteeinheit, insbesondere mit einem digitalen Signalprozessor verbunden sind. Auf einer Meßfläche des Sensors auftreffende Lichtstrahlen von den Leuchtdioden auf dem Helm werden dabei in entsprechende elektrische Signale umgewandelt.

Die US 4,804,325 A beschreibt einen Waffentrainingssimulator, welcher einen Computer mit zugeordnetem Speicher und Software umfasst. Auf der Waffe ist dabei ein aus einem Sensor-Array bestehender Quadranten-Sensor montiert, welcher Zielpositionssignale erzeugt, die auf punktförmigen Lichtquellen an simulierten Zielen basieren. Der Computer generiert dabei aufgezeichnete und Echtzeit-Videoanzeigen und gibt Ausdrucke über Zielvorgänge, Treffer und andere Informationen aus. Die Erfassung, Messung und Anzeige von Verkantungswinkeln der Waffe wird ebenso vorgeschlagen und sind hierfür am Ziel zwei punktförmige Lichtquellen angeordnet. Für diesen Waffentrainingssimulator wird auch vorgeschlagen, Korrekturfaktoren für Ballistik, Zielentfernung, Zielgeschwindigkeit, Munitions- bzw. Ladungsstreung, Gewehrneigungswinkel und Parallaxenfehler zu berücksichtigen, um möglichst genaue Trefferpunktdaten zu berechnen. Die Parameter simulierte Zielentfemung und Zielgeschwindigkeit finden dabei in innerhalb der Software enthaltenen, vordefinierten Tabellen entsprechende Berücksichtigung. Für die rechnerische Waffenneigungswinkelkorrektur und Parallaxenkorrektur ist eine zusätzliche Erfassung vorgesehen.

Es ist weiters eine Vorrichtung zur Ermittlung der insbesondere räumlichen Lage und/oder einer Bewegung einer Waffe unter Verwendung von Strahlen bekannt. Dazu werden mehrere über die Fläche verteilte, lichtempfindliche Elemente angeordnet und die Lichtverteilung wird von mehreren einfallenden Strahlen mit einem komplizierten Berechnungsprogramm ermittelt, um daraus eine Mittelpunktslage der Empfangseinheit bzw. deren Meßfläche gegenüber den Abstrahlungsorten der Strahlen zu ermitteln. Aufgrund der Auswertung der Position der Strahlung über die Strahlungsintensität, insbesondere die einfallende Lichtmenge, ist dieses System ungenau und kann vor allem auch durch Fremdlicht, wie Blitze, beispielsweise durch Pulverzündungen bei Waffen oder dgl., sehr leicht verfälscht werden. Außerdem ist durch die komplizierte Berechnung der Mittelpunktslage eine Ermittlung der jeweiligen Position in Echtzeit nicht möglich.

Der vorliegenden Erfindung liegt die Aufgabe zugrunde, eine Vorrichtung zur Ermittlung der räumlichen Lage und Bewegung einer Waffe, insbesondere Schußwaffe, sowie eine Anlage zu schaffen, die mit wenigen standardmäßigen elektronischen Bauteilen das Auslangen findet und eine rasche Positionsermittlung ermöglicht.

Die Aufgabe der vorliegenden Erfindung wird dadurch gelöst, daß zwischen der Meßfläche und der Sendeeinheit eine Optik, d.h. eine Linsenanordnung ausgebildet ist und die Auswerteeinheit bevorzugt über ein Bussystem und/oder ein Netzwerk mit einem Personal-Computer verbindbar ist und die Wellenlänge der Strahlen in einem für Menschen unsichtbaren Bereich liegt, wobei an der Empfangseinheit durch die Lage der Auftreffstellen auf der Meßfläche auch die Verkantung der Waffe um deren Längsachse gegenüber der Zielscheibe festgestellt ist und der Empfangseinheit eine Entfemungsmeßvorrichtung zum Ermitteln der Distanz zwischen der Empfangseinheit und der Sendeeinheit bzw. einer Signalquelle zugeordnet ist. Vorteilhaft ist hierbei, daß mit der Absendung von nur zwei Strahlen und der Möglichkeit, deren Position aufeinanderfolgend in äußerst kurzen Zeitspannen unabhängig von der Lichtintensität oder der Strahlungsintensität der einfallenden Strahlung exakt zu ermitteln, eine Lagebestimmung der Meßfläche bzw. der Empfangseinheit und damit der Waffe, insbesondere des Laufes der Waffe, gegenüber der Zielscheibe durchgeführt werden kann. Weiters ist eine einfache Verarbeitung, Speicherung und wiederholte Wiedergabe der Daten möglich. Außerdem wird eine Beeinflussung des Schützen durch diese Strahlen vermieden und kann die Verdrehung der Waffe um deren Längsachse bzw. deren Wirkungsrichtung zuverlässig erfaßt werden. Vorteilhaft ist weiters, daß dadurch die ermittelten Entfernungsdaten in die Bewertung des Schützen und/oder in ein Signalausrichtungssystem einfließen können.

Vorteilhaft ist eine Ausbildung nach Anspruch 2, da durch die Ermittlung des Stromflusses in einer Raumrichtung in zwei Richtungen über eine Verhältnisberechnung die Position des Auftreffpunktes in jeder gewünschten Raumrichtung exakt ermittelt werden kann. Dadurch, daß ein Verhältnismaß zur Berechnung herangezogen wird, können auch wechselnde Intensitäten der Strahlung, insbesondere Lichtintensitäten, das Meßergebnis nicht nachteilig verändern und bedarf es daher auch keiner komplizierten Ausgleichsberechnungen, um die Lichtverteilung über mehrere lichtempfindliche Elemente oder Meßflächen zu ermitteln. Dadurch ist es nun auch möglich, mit einer einzigen Meßfläche und mit aufeinanderfolgenden Ermittlungsvorgängen für den Auftreffpunkt von mehreren Strahlen zu arbeiten und trotzdem noch eine Darstellung der Bewegung der Waffe gegenüber einer Zielscheibe praktisch in Echtzeit durchzuführen.

Durch die vorteilhafte Weiterbildung nach Anspruch 3 wird erreicht, daß mit nur einer Meßfläche unter Verwendung mehrerer Strahlen eine exakte Positionsbestimmung, die auch die Verkantung der Waffe miteinschließen kann, ermöglicht wird.

Die Beeinflussung des Schützen durch die Strahlen wird weiters durch die vorteilhafte Ausgestaltung nach Anspruch 4 vermieden.

Des weiteren ist es durch die Ausbildung nach Anspruch 5 möglich, eine ständige Kommunikation zwischen der auf der Waffe angeordneten Empfangseinheit und der Auswerteeinheit zu ermöglichen, ohne daß die Handhabung der Waffe vor allem bei drahtloser Übertragung nachteilig beeinflußt wird.

Aufgrund der einfachen Auswertung der Positionssignale des Auftreffpunktes ist in vorteilhafter Weise nunmehr auch eine Ausbildung nach Anspruch 6 möglich.

Um die Ermittlung der Positionssignale des Auftreffpunktes mit der Schußabgabe zu beenden, ist eine Weiterbildung nach Anspruch 7 von Vorteil.

Vorteilhaft ist auch eine Ausgestaltung nach Anspruch 8, da damit die Position der Waffe in dem Moment, wo der Benutzer bzw. Schütze den Druckpunkt erreicht hat, gesondert festgestellt werden kann.

Von Vorteil ist aber auch eine Weiterbildung nach Anspruch 9, da dadurch die sich gegebenenfalls verändernden Positionen der Empfangseinheit auch bei einer weitläufigen Bewegung der Waffe jederzeit ermittelt werden können und somit auch frei wählbare Schußabgabe- bzw. Anvisierpositionen vom Schützen eingenommen werden können und diese Positionsdaten vorzugsweise in die Beurteilung der Schießleistung einfließen.

Nach der vorteilhaften Weiterbildung gemäß Anspruch 10 kann die Schußabgabe- bzw. Anvisierposition des Schützen relativ zur Zielscheibe in einem weitläufigen Bereich frei gewählt werden, wobei immer die beabsichtigte Aufzeichnung des Bewegungsablaufes der Waffe gewährleistet werden kann. Dies ist insbesondere bei Trainingsanlagen zum Training der Handhabung bzw. des Gebrauchs von Waffen von Vorteil.

Das Auftreffen der für die Bewegungserfassung erforderlichen Strahlen bzw. Signale auf der Empfangseinheit ist durch die Ausbildung gemäß Anspruch 11 auch bei winkelig zueinander verlaufenden Strahlen bzw. Signalen gewährleistet.

Durch die vorteilhafte Weiterbildung nach Anspruch 12 kann der Bewegungsablauf der Waffe plötzlich auftretenden Ereignissen im Umfeld des Schützen gegenübergestellt werden, sodaß deren Einfluß auf den Schützen, z.B. anhand impulsartiger Abweichbewegungen, bestimmt werden kann.

Die Ausgestaltung nach Anspruch 13 ermöglicht eine simultane Überwachung des Bewegungsablaufes der Waffe für Kontrollorgane bzw. Trainer oder Zuschauer.

Von Vorteil ist auch die Ausgestaltung nach Anspruch 14, da dadurch mit einfachen, mechanischen Mitteln eine Fremdbeeinflussung der Empfangseinheit durch die für die entsprechende Empfangseinheit nicht bestimmten Strahlen bzw. Signale verhindert ist.

Es ist aber auch eine Ausgestaltung nach Anspruch 15 möglich, wodurch eine sehr funktionssichere Ausgrenzung von für die entsprechende Empfangseinheit unzutreffenden Strahlen bzw. Signalen von anderen, nicht zugehörigen Signalquellen erreicht ist.

Von Vorteil ist aber auch eine Ausgestaltung nach Anspruch 16, da dadurch mit einfachen Mitteln die eintreffenden Strahlen fokusierbar sind und gleichzeitig Fremdbeeinflussungen ausgeschlossen werden können.

Abweichungen von das Schußergebnis grundlegend negativ beeinflussenden Anvisier- bzw. Haltestellungen der Waffe können durch die Ausbildung nach Anspruch 17 dem Benutzer bzw. dem Schützen mitgeteilt werden, sodaß dieser noch während der Anvisierphase eine Korrektur der nachteiligen Halterung der Waffe vornehmen kann.

Die Weiterbildung nach Anspruch 18 ermöglicht den Aufbau einer kompakten Anzeigevorrichtung, die in vorteilhafter Art und Weise auch ausgehend von einer zentralen Stelle fernbedient werden kann.

Vorteilhaft ist auch eine Ausgestaltung nach Anspruch 19, da sich dadurch der Schütze, insbesondere beim Einsatz akustischer Ausgabevorrichtungen zur Gänze auf den Anvisiervorgang konzentrieren kann und beiläufig Informationen über die Qualität bzw. den Erfolg seiner Tätigkeit erhalten kann.

Vorteilhaft ist bei der Ausbildung nach Anspruch 20, daß die Sendeeinheit bzw. die Sender für die Strahlen im Bereich der Zielscheibe angeordnet ist bzw. sind, sodaß eine kompakte Einheit zwischen Zielscheibe und Sender erreicht und damit eine exakte geometrische Zuordnung der Sender und somit der Strahlenausgangspunkte zu der Zielscheibe erzielt werden kann.

Eine weitere Verbesserung des Meßergebnisses kann durch die Weiterbildungen der Vorrichtung nach den Ansprüchen 21 und 22 erzielt werden.

Vorteilhaft ist aber auch eine Weiterbildung nach Anspruch 23, da dadurch dem Benutzer der Waffe bzw. Schützen jederzeit der Bewegungsablauf der Waffe vor der Schußabgabe bildlich bereitgestellt werden kann, sodaß vor allem bei Sportschützen für das laufende Training weitere Erkenntnisse über die Waffenhandhabung rasch erzielt werden können.

Vorteilhaft ist es auch, wenn die Auswerteeinheit zur Bearbeitung der Daten von mehreren Empfangseinheiten nach Anspruch 24 ausgebildet ist.

Durch die Weiterbildung nach Anspruch 25 wird in vorteilhafter Weise trotz des schrittweise aufeinanderfolgenden Abtastens der Positionen der Auftreffstellen der Strahlen eine Echtzeitdarstellung der Lage der Waffe gegenüber der Zielscheibe bzw. deren Bewegungen gegenüber der Zielscheibe ermöglicht.

Von Vorteil ist auch eine Ausbildung nach Anspruch 26, da dadurch eine vordefinierte Referenzlage gebildet ist, die den Auswertungsvorgang erleichtert.

Von Vorteil ist aber auch eine Weiterbildung nach Anspruch 27, da dadurch eine eindeutige Identifikation des jeweiligen Strahls aus einem beliebigen Strahlenpaar auch bei einer Mehrzahl von Strahlenquellen mit einfachen Mitteln möglich ist.

Von Vorteil ist aber auch eine Ausbildung nach Anspruch 28, da dadurch die Zielscheibe vom Schützen jeweils in ihrer wahren Größe gesehen wird, da diese unabhängig vom Standort des Schützen stets frontal eingesehen werden kann und somit optische Verzerrungen der Zieldarstellung aufgrund schiefer Blickwinkel vermieden sind.

Eine vollautomatische Nachführung der Sendestrahlen bzw. der Signale zur Aufrechterhaltung der Verbindung zwischen Empfangseinheit und Signalquelle ist durch die Ausbildung gemäß Anspruch 29 erzielt.

Von Vorteil ist aber auch eine Weiterbildung nach Anspruch 30, da dadurch bewegte Zieldarstellungen, wie z.B. laufende Jagdmotive realisiert werden können und/oder die Verbin dung zwischen der Sendeeinheit und der zugehörigen Empfangseinheit weitgehend unabhängig vom Standort des Schützen aufrecht erhalten werden kann.

Von Vorteil ist aber auch eine Ausbildung nach Anspruch 31, da dadurch die Halbduplex- bzw. Vollduplexübertragung zwischen der Sendeeinheit und der zugehörigen Empfangseinheit mit geringem hardwaretechnischen Aufwand gewährleistet ist.

Die Aufgabe der Erfindung wird auch durch die Merkmale des Anspruches 32 gelöst. Vorteilhaft ist dabei, daß eine Anlage geschaffen ist, welche mehreren Benutzern bzw. Schützen zur Verfügung steht, wobei mehreren Schützen mehrere Zieldarstellungen zugeordnet sind, die wahlweise eingesetzt werden können und dadurch auch kontrollierte Gefechtssituationen bzw. Überraschungsangriffe von Organen des öffentlichen Sicherheitsdienstes oder dgl. simuliert und geprobt werden können. Der Bewegungsablauf und/oder die Anvisierzeit, die Anvisierdauer und die Schlagfertigkeit eines Probanden können dabei aufgezeichnet und analysiert werden, sodaß gezielte Verbesserungsvorschläge in der Handhabung bzw. im gesamten Bewegungsablauf fundiert erarbeitet werden können. Darüber hinaus ist durch diese Anlage eine Qualifizierung eines Anwärters auf eine Stelle im Sicherheitsdienst eruierbar bzw. eine Qualifizierung von Personen im Sicherheitsdienst kontrollier- bzw. überprüfbar.

Von Vorteil ist dabei eine Ausbildung nach Anspruch 33, da dadurch der Gesamtbestand der erfaßten Daten zentral verwaltet und/oder weiterverarbeitet werden kann.

Von Vorteil ist auch eine Ausbildung nach Anspruch 34, da dadurch die entsprechenden Informationen bzw. Daten direkt am jeweiligen Schießstand ausgegeben werden können und somit die Gefahr von Fehlinterpretationen bzw. die Wahrscheinlichkeit der Aufnahme unzutreffender Informationen für den Schützen wesentlich verringert ist.

Von Vorteil ist aber auch eine Weiterbildung nach Anspruch 35, da dadurch die Betriebsparameter gemäß den individuellen Wünschen des Schützen bzw. des Benutzers veränderbar und/oder gezielte Informationen aus dem gesamten Datenbestand abrufbar sind.

Ein Maß für die Nervosität bzw. für die Gelassenheit eines Benutzers der Anlage bzw. eines Probanden ist durch die Ausbildung gemäß Anspruch 36 eruierbar.

Durch die Ausbildung nach Anspruch 37 können die an der zentralen Steuer- und/oder Auswertevorrichtung zusammengeführten Daten der gesamten Anlage zur gezielten Steuerung bzw. Aktivierung der Vorrichtung zur Beeinflussung des Schützen verwertet werden.

Durch die Weiterbildung nach Anspruch 38 ist eine überraschende, für den Benutzer unvorhersehbare Aktivierung der Vorrichtung zum Erschrecken und/oder Ablenken des Benutzers möglich, wodurch deren Effektivität gesteigert werden kann.

Weiters ist auch eine Ausbildung nach Anspruch 39 von Vorteil, da dadurch ein System geschaffen ist, welches die für die Aufzeichnung des Bewegungsablaufes der Waffe erforderliche Verbindung zwischen der Sendeeinheit und der zugehörigen Empfangseinheit unabhängig vom Standort des Benutzers stets gewährleistet.

Die Erfindung wird im nachfolgenden anhand der in den Zeichnungen dargestellten Ausführungsbeispiele näher erläutert.

Es zeigen:
- Fig. 1: eine erfindungsgemäße Vorrichtung in stark vereinfachter, schematischer Darstellung in Art eines Blockschaltbildes;
- Fig. 2: die Zielscheibe mit der dieser zugeordneten Sendeeinheit in Stimansicht gemäß den Pfeilen II - II in Fig. 1;
- Fig. 3: einen Teil der Empfangseinheit, nämlich der Meßfläche, stark schematisch vereinfacht und in Stirnansicht geschnitten gemäß den Linien III - III in Fig. 1;
- Fig. 4: ein Ablaufdiagramm für die Ansteuerung der einzelnen Sender der Sendeeinheit in vereinfachter, schematischer Darstellung;
- Fig. 5: eine Trainingsanlage für Schützen mit mehreren Schießständen, bei welchen die Vorrichtung zur Ermittlung der Bewegung einer Waffe einem Richtsystem mit einer Ortungsvorrichtung und/oder einer Nachführvorrichtung zugeordnet ist, in Draufsicht und stark vereinfachter, schematischer Darstellung;
- Fig. 6: die Vorrichtung zur Ermittlung der Waffenbewegung in Draufsicht, teilweise geschnitten und in stark vereinfachter, schematischer Darstellung;
- Fig. 7: eine andere Ausführungsvariante der Vorrichtung zur Ermittlung der Waffenbewegung mit einer parallel verlaufenden Signalabstrahlung sowie mit einer Nachführvorrichtung für die Signalquelle in Draufsicht, teilweise geschnitten und stark vereinfachter Darstellung;
- Fig. 8: eine graphische Auswertung und Gegenüberstellung der mit der Empfangseinheit und/oder der Vorrichtung zur Ermittlung der Waffenbewegung erfaßten Daten als Auszug, in stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

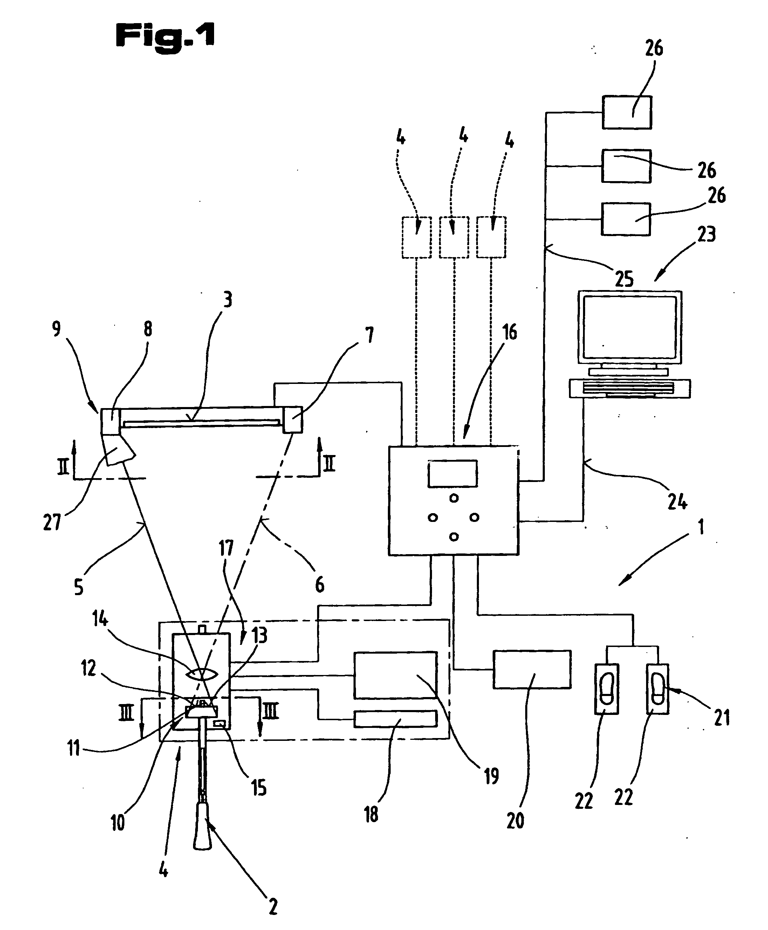

In den Fig. 1 bis 4 ist eine Vorrichtung 1 zur Ermittlung der insbesondere räumlichen Lage und/oder der Bewegung einer Waffe 2 gegenüber einer Zielscheibe 3 gezeigt. Diese Vorrichtung 1 umfaßt eine Empfangseinheit 4 für zumindest zwei Strahlen 5, 6, die von Sendern 7, 8 einer Sendeeinheit 9 auf die Empfangseinheit 4 gerichtet sind. Diese Empfangseinheit 4 umfaßt einen Sensor 10 mit einer Meßfläche 11 zum Ermitteln von Auftreffstellen 12, 13 der von den Sendern 7, 8 in Richtung der Meßfläche 11 ausgesandten Strahlen 5, 6. Zwischen dieser Meßfläche 11 und den Sendern 7, 8 kann, wie schematisch angedeutet, auch eine Optik 14, d.h. entsprechende Linsenanordnungen, zur besseren Bündelung der einfallenden Strahlen 5, 6 vorgesehen sein. Die Empfangseinheit 4, die im vorliegenden Ausführungsbeispiel rein schematisch und daher auch der Größe nach unproportional im Verhältnis zur Größe der Waffe 2 auf dieser angeordnet dargestellt ist, kann üblicherweise zusätzlich über oder unter dem Visier der Waffe 2 oder am Lauf derselben oder gegebenenfalls auch integriert in einem Zielfernrohr angeordnet sein.

Die Energieversorgung der Empfangseinheit 4 kann über eine in derselben angeordnete Energiequelle 15, wie beispielsweise eine Batterie, erfolgen, wobei diese Energiequelle 15 aber auch durch ein normales Versorgungsnetz für Niederspannung oder ein Ladegerät gebildet sein kann, wenn die Empfangseinheit 4 mit einer entsprechenden Verbindungseinrichtung, die drahtlos oder drahtgebunden sein kann, mit dem Versorgungsnetz oder dem Ladegerät verbunden ist.

Zur Datenübertragung und zum Informationsaustausch zwischen der Empfangseinheit 4 und einer Auswerteeinheit 16 ist eine Kommunikationsvorrichtung 17 angeordnet. Diese Kommunikationsvorrichtung 17 kann zur drahtlosen Verbindung der Empfangseinheit 4 mit der Auswerteeinheit 16 ausgebildet sein, es ist aber ebenso möglich, daß Datenkabel zwischen diesen beiden Einheiten vorgesehen sind.

Die Auswerteeinheit 16 kann dabei zweckmäßigerweise auf der Waffe 2 selbst, beispielsweise im Schaft oder im Griff der Waffe 2 integriert, oder distanziert von der Waffe 2 angeordnet sein, wobei dann die Verbindung zwischen der Empfangseinheit 4 und der Auswerteeinheit 16 bzw. diesen zwischengeschalteten Sende- und Empfangseinheiten 9, 4 mit elektromagnetischen Wellen oder mittels Lichtsignalen, beispielsweise durch Infrarotübertragung, erfolgen kann.

Der Vorteil der externen Anordnung der Auswerteeinheit 16 liegt darin, daß das Gewicht der Waffe 2 nicht verändert wird und daß die Auswerteeinheit 16 auch beispielsweise für mehrere Schießstände bzw. mehrere Empfangseinheiten 4 auf parallel zueinander verwendeten Waffen 2 eingesetzt werden kann.

Vorteilhafterweise ist es aber auch möglich, die Auswerteeinheit 16 und Empfangseinheit 4 als Baueinheit auszubilden. An der Empfangseinheit 4 kann zweckmäßigerweise, selbstverständlich aber auch an der Auswerteeinheit 16, ein Mikrofon 18, vorteilhafterweise zur Feststellung der Schußabgabe, angeordnet sein. Des weiteren ist es auch möglich, entweder an der Auswerteeinheit 16 und/oder der Empfangseinheit 4 einen Drucksensor 19 anzuschließen, der dem Auslöser der Waffe 2 und/oder dem dem Auslöser zugewandten Finger des Benutzers der Waffe 2 zugeordnet ist.

Um die Empfangs- und/oder Auswerteeinheit 4, 16 bzw. die Vorrichtung 1 zum Schußtraining insbesondere von Schußwaffen einzusetzen, kann es auch vorteilhaft sein, der Vorrichtung 1, insbesondere der Auswerteeinheit 16, einen Pulsmesser 20 zuzuordnen, der den Puls eines Benutzers 21 der Waffe 2 ermittelt und der Auswerteeinheit 16 zuführt, sodaß der Pulsschlag bei der Anzeige bzw. der Berechnung und Ermittlung des Bewegungsablaufes der Waffe 2 unmittelbar vor der Schußabgabe hinzugefügt werden kann.

Für die Exaktheit der Trefferlage ist unter anderem auch die Aufteilung des Gewichtes des Benutzers 21 auf dessen Füße von Interesse. Dementsprechend ist es möglich, daß weitere Sensoren 22 zur Feststellung der Gewichtsverteilung des Benutzers 21 mit der Auswerteeinheit 16 bzw. der Vorrichtung 1 schaltungstechnisch verbunden sind.

Zur Verbindung zwischen der Empfangseinheit 4 und der Auswerteeinheit 16 kann selbstverständlich auch jedes bekannte Bussystem oder Netzwerk herangezogen werden.

Vorteilhafterweise ist die Auswerteeinheit 16 mit einem Personal-Computer 23 über ein Bussystem 24 und über ein Netzwerk 25 mit Anzeigevorrichtungen 26, die verschiedenen Benutzern 21 von Waffen 2 parallel zugeordnet sein können, verbunden. So ist es, wie durch strichlierte Linien angedeutet, auch möglich, daß an die Auswerteeinheit 16 mehrere schematisch angedeutete Empfangseinheiten 4 angeschlossen sein können.

Die Übertragung der Positionssignale zwischen den Empfangseinheiten 4 und der Auswerteeinheit 16 erfolgt dabei mit einer Codierung bzw. einer Adresse, sodaß die in der Auswerteeinheit 16 einlangenden Signale voneinander unterschieden werden können und daß vor allem auch dann, wenn eine drahtlose Übertragung der Positionssignale von der Empfangseinheit 4 zur Auswerteeinheit 16 erfolgt, Fehlübertragungen und Fehlzuordnungen vermieden werden können.

Auch können für die Ermittlung der Position der Auftreffstellen 12, 13 unterschiedliche Strahlen 5, 6 verwendet werden. Bevorzugt werden selbstverständlich Lichtstrahlen eingesetzt. Hierbei können von den Sendern 7, 8 Strahlenbündel 27 ausgesandt werden, wobei durch die Optik 14 bzw. entsprechende Lochblenden oder ähnliche aus dem Stand der Technik bekannte Vorkehrungen sichergestellt werden kann, daß der Strahl 5, 6 gebündelt auf der Meßfläche 11 auftrifft.

Als zweckmäßig erweist es sich selbstverständlich, wenn die Strahlen 5, 6 eine Wellenlänge aufweisen, die in einem für den Menschen unsichtbaren Bereich liegen, wie z.B. Infrarotstrahlen, da dadurch der Benutzer 21 bei der Schußabgabe mit der Waffe 2 durch die Strahlen 5, 6, die ihm von der Zielscheibe 3 entgegenleuchten, nicht irritiert wird. Es können aber auch jegliche anderen Strahlungen, beispielsweise elektromagnetische Strahlungen, Laserstrahlungen im unsichtbaren Bereich oder dgl., für diesen Zweck Verwendung finden. Die Funktion der erfindungsgemäßen Vorrichtung 1 bzw. der Empfangseinheit 4 ist nunmehr folgendermaßen.

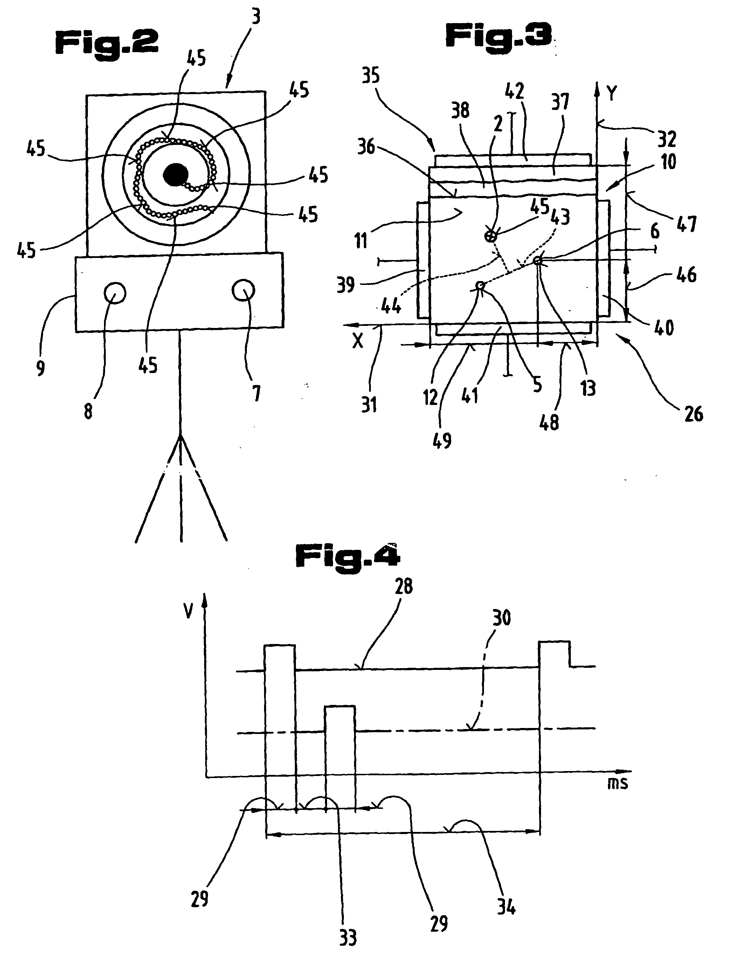

Von den Sendern 7, 8 werden die Strahlen 5, 6 ausgesandt, die auf den Benutzer 21 bzw. die Waffe 2 bzw. die auf dieser Waffe 2 befestigte Empfangseinheit 4 gerichtet sind. Dabei werden die Sender 7, 8 zur Abstrahlung der Strahlen 5, 6 über die Sendeeinheit 9 beispielsweise von der Auswerteeinheit 16 oder dem Personal-Computer 23 oder gegebenenfalls einer sonstigen elektronischen Steuerung so angesteuert, daß, wie beispielsweise aus dem Ablaufdiagramm in Fig. 4 zu ersehen ist, der Sender 8, der durch eine Diagrammlinie 28 dargestellt ist, für eine kurze Zeitdauer zwischen 2 ms und 20 ms, im bevorzugten Ausführungsbeispiel für eine Zeitdauer 29 von 5 ms, mit Energie beaufschlagt wird. Dies führt zur Abbildung des Strahls 5 auf der Meßfläche 11 entsprechend der Darstellung in vollen Linien im Bereich der Auftreffstelle 13.

Nach Beenden der Beaufschlagung des Senders 8 wird der Sender 7 aktiviert und sendet den in strichpunktierten Linien dargestellten Strahl 6 in Richtung der Empfangseinheit 4. Die Beaufschlagung des Senders 7 ist hierbei durch eine Diagrammlinie 30 im Ablaufdiagramm in Fig. 4 schematisch dargestellt. Die Zeitdauer 29, über die dieser Sender 7 aktiviert wird, ist nun beispielsweise gleich groß wie die Zeitdauer 29 für den Sender 8, es kann aber natürlich auch jede beliebige andere Zeitdauer 29 dafür gewählt werden.

Zur Ermittlung der jeweiligen Lagesignale in zwei Raumrichtungen 31, 32 in dem Achsenkreuz nach Fig. 3, um die in der x-Richtung und y-Richtung gerichteten Koordinaten zu errechnen, ist zwischen der Absendung der Strahlen 5, 6 eine Pausezeit 33 vorgesehen, die entsprechend der hardware- und softwaretechnischen Auslegung der Empfangseinheit 4 und/oder der Auswerteeinheit 16 bestimmt ist, beispielsweise jedoch 2 ms bis 20 ms, bevorzugt 5 ms, beträgt.

Dies führt nun zu einer Abbildung des Querschnittes des Strahls 6 an der Auftreffstelle 12 auf der Meßfläche 11 und zu einem Lichtpunkt, dessen Position in den beiden Raumrichtungen 31, 32 gemäß der x-Achse und y-Achse ermittelt werden kann.

Im Sinne des vorliegenden Verfahrens ist es selbstverständlich auch möglich, danach noch mehrere Strahlen 5, 6 aus verschiedenen Positionen in Relation zur Zielscheibe 3, insbesondere zu den Ringen der Zielscheibe 3 abzusenden und deren Position in der Empfangseinheit 4 festzustellen, wodurch üblicherweise die Genauigkeit der Winkellage und der exakten Position der Waffe 2 erhöht werden kann.

Danach erfolgt die Auswertung der gewonnenen Positionssignale und wird am Ende einer Zyklusdauer 34 ein neuer Zyklus mit der Absendung eines Strahles 5 vom Sender 8 wieder begonnen. Die Zyklusdauer 34 kann dabei typischerweise zwischen 20 ms und 100 ms, bevorzugt 50 ms, betragen. Die Zyklusdauer 34 ist auch ein Maß für die Möglichkeit der Echtzeitdarstellung der Bewegung der Waffe 2 in Relation zur Zielscheibe 3, da bei zunehmender Zyklusdauer 34 eine immer größere Zeitverschiebung zwischen der Bewegung und der Darstellung der Bewegung beispielsweise auf einem Bildschirm erfolgt. Dies könnte nur dadurch verhindert werden, daß mehrere Meßflächen 11 so angeordnet werden, daß immer nur ein Strahl 5 oder 6 der verschiedenen Sender 7, 8 auf der Meßfläche 11 eintreffen kann, wobei dann die Auswertung gleichzeitig erfolgen könnte und damit auch die Sender 7, 8 die gesamte Zeitdauer 29 Strahlen 5, 6 aussenden könnten. Eventuell könnte eine Unterscheidung der einzelnen Strahlengänge auch durch eine Frequenzcodierung der einzelnen Strahlen 5, 6 erfolgen.

Die Auswertung der x- und y-Koordinaten erfolgt nun derart, daß der Sensor 10 durch ein lichtempfindliches Element 35 gebildet ist, welches aus einer positiven Lage 36, einer negativen Lage 37 und einer Isolationslage 38 besteht.

Diesem lichtempfindlichen Element 35 sind nun im Bereich der positiven Lage 36 in Richtung der x-Achse bzw. Raumrichtung 31 distanziert auf den beiden einander gegenüberliegenden Seiten Elektroden 39, 40 zugeordnet. Des weiteren sind der negativen Lage 37 in Richtung der y-Achse, also der Raumrichtung 32, distanziert auf den einander gegenüberliegenden Stirnseiten weitere Elektroden 41, 42 zugeordnet. Trifft nun der Strahl 5 oder 6 an den Auftreffstellen 12 oder 13 auf das lichtempfindliche Element bzw. die lichtsensitive Lage auf, dann wird das eingefallene Licht fotoelektrisch umgewandelt und durch die beiden Elektroden 39, 40 bzw. 41, 42 in elektrische Ladung umgewandelt. Durch den gleichbleibenden Widerstand über den gesamten Querschnitt der negativen und positiven Lage 36, 37 ist der mit den Elektroden 39, 40 bzw. 41, 42 jeweils festgestellte Strom umgekehrt proportional zur Entfernung zwischen der Auftreffstelle 12 bzw. 13 und den beiden Elektroden 39, 40.

Gleichermaßen trifft dies auf die weiteren Elektroden 41, 42 in bezug auf die negative Lage 37 zu und kann somit aufgrund des Stromflusses in der positiven Lage 36 und den beiden Elektroden 39, 40 die Position der Auftreffstelle 12 und 13 unabhängig voneinander in x-Richtung oder als x-Koordinate und in y-Richtung bzw. y-Koordinate ermittelt werden.

Die im Detail hierzu vorgesehenen Berechnungsmodelle und -formeln sind aus dem Stand der Technik für zweidimensionale positionsempfindliche Detektoren, sogenannte PSD, bekannt.

Nachdem die Position der Auftreffstelle 12 oder 13 durch die Differenz zwischen den Stromflüssen aufgrund des Abstandes der Auftreffstellen 12, 13 zu den Elektroden 39, 40 bestimmt ist, hat die Lichtintensität der einfallenden Strahlung keinerlei Auswirkung auf das Ergebnis der Messung und wird daher eine exakte Positionsermittlung, die auch mit einfachen Signalverarbeitungsgeräten und Software abgewickelt werden kann, erzielt.

Ist nun beispielsweise aufgrund des Stromflusses bzw. der Spannung an den Elektroden 39, 40, 41, 42 in den beiden Raumrichtungen 31, 32 die jeweilige Koordinate in dem Koordinatensystem oder sind die Abstände der Auftreffstelle 12 bezogen auf die Seitenkanten der Meßfläche 11 ermittelt, so werden diese Werte abgespeichert und wird unmittelbar darauf beim Auftreffen des Strahls 5 auf der Auftreffstelle 13 die Position der Auftreffstelle 13 in der x- und y-Richtung bzw. der jeweiligen Raumrichtung 31, 32 ermittelt.

Durch die Lage der beiden Auftreffstellen 12, 13 im Achsenkreuz bzw. auf der Meßfläche 11 kann nunmehr ausgehend von einer Verbindungslinie 43 mittels einer dazu verlaufenden Senkrechten 44, die die Verbindungslinie 43 im Mittel zwischen den beiden Auftreffstellen 12 und 13 schneidet, die Verkantung der Waffe 2 gegenüber der Zielscheibe 3 ebenso festgestellt werden.

Damit sind also auch Winkelabweichungen und Entfernungsänderungen der Waffe 2 gegenüber der Zielscheibe 3 bzw. der die Zielscheibe 3 aufnehmenden Ebene feststellbar. Durch die Ermittlung der Position der Auftreffstellen 12, 13 sowie der Position beispielsweise des Laufes der Waffe 2 ist der Abfragezyklus beendet und kann dementsprechend ein weiterer Abfragezyklus eingeleitet werden. Des weiteren ist es nunmehr möglich, die Position der Waffe 2, beispielsweise deren Lauf, wie sie in Fig. 3 schematisch dargestellt ist, in eine Anzeigetafel für den Schützen zu übertragen, um darzustellen, welche Positionen die Waffe 2 bzw. welche Lage die Waffe 2 bezogen auf die Ringe der Zielscheibe 3 in den letzten Sekunden vor Schußauslösung eingenommen hat. Dies wird üblicherweise auf einer getrennt von der Zielscheibe 3 befindlichen Anzeige dargestellt oder kann natürlich auch ausgedruckt oder abgespeichert werden, ist jedoch, um das Verständnis dafür zu erleichtern, in der vorliegenden Fig. 2 durch die Darstellung von einzelnen aufeinanderfolgenden Positionen 45 schematisch auf der Zielscheibe 3 dargestellt.

Wie aus der Darstellung in Fig. 3 weiters zu ersehen ist, ist es daher nun möglich, die Relativlage der Auftreffstellen 12 und 13 zu den jeweiligen Elektroden 39 bis 42, festzustellen, wie dies anhand der Auftreffstelle 13 für den Strahl 6 gezeigt ist.

Aufgrund des Stromsignals, welches mit den Elektroden 41, 42 ermittelt wird, kann in y-Richtung eine Distanz 46 zwischen der Elektrode 41 und der Auftreffstelle 13 und eine Distanz 47 zwischen dieser und der Elektrode 42 ermittelt werden.

Gleichermaßen ist es in Raumrichtung 31, also in x-Richtung, möglich, eine Distanz 48 zwischen der Auftreffstelle 13 und der Elektrode 40 und eine Distanz 49 zwischen der Auftreffstelle 13 und der Elektrode 39 zu ermitteln. Damit hat die Leuchtdichte bzw. die Strahlintensität des Strahls 5, 6 nur einen Einfluß auf das Summensignal und ist natürlich bei einem geringeren Lichteintritt ein geringeres Summensignal vorhanden und sind damit auch die beiden den Distanzen 46, 47 bzw. 48, 49 entsprechenden Teilsignale niederer. Es entsteht jedoch kein Ungleichgewicht bei der Ermittlung der Distanzen 46, 47, respektive 48, 49 untereinander.

Der Rückbezug auf die Lage der einzelnen Positionen 45, bezogen auf die Ringe der Zielscheibe 3, ist dadurch möglich, daß die Sender 7, 8, bezogen auf diese Ringe, eine exakte Position in der die Zielscheibe 3 aufnehmenden Fläche einnehmen. Selbstverständlich ist es auch möglich, im Bereich der Zielscheibe 3 nur die Anzeigevorrichtung 26 in Originalgröße der Schießscheibe oder in überdimensionaler Größe anzuordnen, wenn nur der Zeitpunkt der Schußabgabe festgestellt, jedoch kein Geschoß verschossen wird, sodaß die Anlage nur zum Training der Schützen ohne Schußabgabe verwendet werden kann.

Selbstverständlich können neben Waffen 2 auch Sportgeräte oder sonstige zur Abgabe oder zum Verschießen geeignete Vorrichtungen mit der erfindungsgemäßen Vorrichtung 1 bzw. der Empfangseinheit 4 überwacht werden.

So ist es beispielsweise auch möglich, derartige Empfangseinheiten 4 in entsprechend kleiner Bauweise auf Schußpfeilen, z.B. Dart's, anzuordnen.

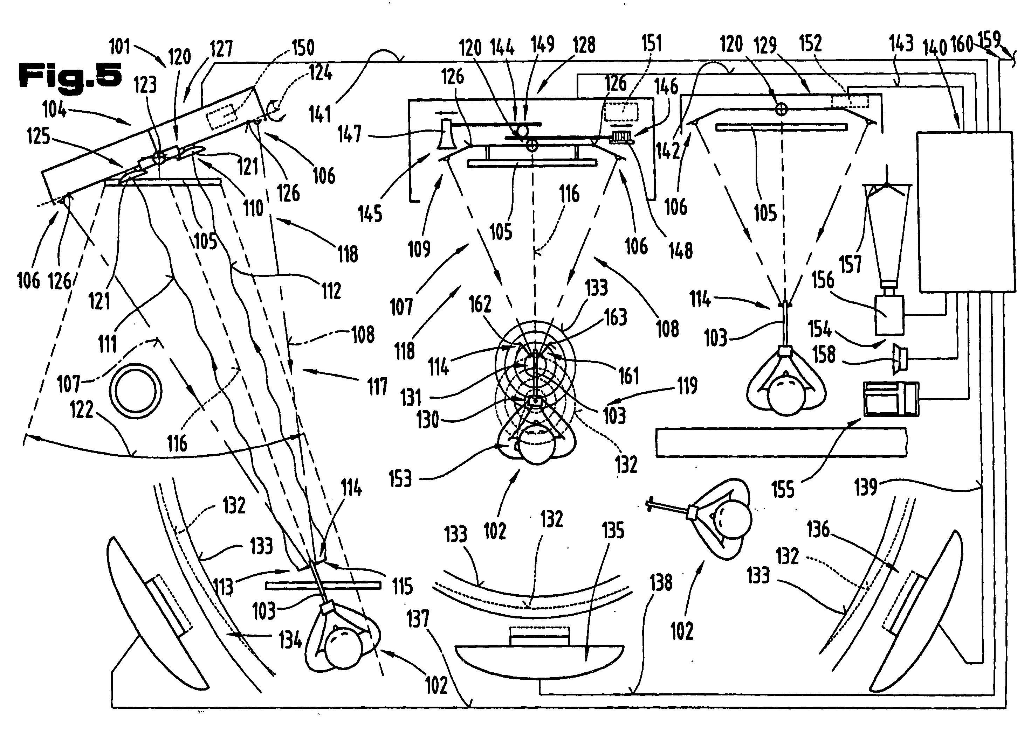

In Fig. 5 ist eine Trainingsanlage 101 für einen oder mehrere Benutzer 102 zum Trainieren der Handhabung bzw. des Einsatzes von Waffen 103, insbesondere Schußwaffen gezeigt. Diese Trainingsanlage 101 umfaßt eine Vorrichtung 104 zur Ermittlung der insbesondere räumlichen Lage und/oder der Bewegung einer Waffe 103 gegenüber einer Zielscheibe 105. Unter Zielscheibe 105 sind dabei sämtliche Zielobjekte für das Schießtraining, wie z.B. Motivzielscheiben, Klapptafeln, Phantomdarstellungen von Personen, Ringzielscheiben, Leinwände mit darauf projizierten Zielmarkierungen und dgl. zu verstehen.

Die Vorrichtung 104 umfaßt einerseits zumindest eine Signalquelle 106 zur Abgabe von zumindest einem signifikanten Signal 107, 108. Die Signalquelle 106 ist dabei bevorzugt als Lichtquelle 109 zur Abstrahlung von zumindest einem Signal 107, 108, bevorzugt in Form von unsichtbarem Licht, insbesondere Infrarotlicht, ausgebildet. Die Signalquelle 106 bzw. Lichtquelle 109 ist dabei bevorzugt im Bereich der Zielscheibe 105 angeordnet und strahlt die Signale 107, 108 entgegen einer Schußrichtung zumindest in den Bereich eines der jeweiligen Zielscheibe 105 zugeordneten.Benutzers 102 mit der Waffe 103. Bevorzugt ist also die Signalquelle 106 der Zielscheibe 105 zugeordnet bzw. im Bereich derselben angeordnet.

Gegebenenfalls kann der Signalquelle 106 auch eine Empfangsvorrichtung 110 zum Empfangen von zumindest einem weiteren Signal 111, 112 zugeordnet sein. Das von der Empfangsvorrichtung 110 unter der Vorraussetzung der Zugehörigkeit und/oder unter Vorraussetzung des Eintretens in den entsprechenden Emfpangsbereich empfangbare Signale 111, 112 ist bevorzugt drahtlos übertragen worden bzw. von zumindest einer Sendevorrichtung 113 bevorzugt drahtlos ausgesendet bzw. in den umgebenden Raum abgestrahlt worden. Die Sendevorrichtung 113 zur Abstrahlung von zumindest einem weiteren Signal 111, 112 ist bevorzugt dem Benutzer 102, insbesondere der Waffe 103 zugeordnet bzw. auf dieser angeordnet. Die mit der Sendevorrichtung 113 korrespondierende Empfangsvorrichtung 110 für die weiteren Signale 111, 112 ist bevorzugt der Zielscheibe 105 zugeordnet bzw. im Bereich dieser angeordnet.

Die von der Sendevorrichtung 113 abgegebenen und von der Empfangsvorrichtung 110 empfangbaren Signale 111, 112 können aber auch drahtgebunden übertragen werden. Bevorzugt sind die Signale 111, 112 jedoch durch drahtlos übertragbare Signale 111, 112, wie z.B. amplituden-oder frequenzmodulierte Funksignale und dgl. und/ oder durch optische Signale 111, 112, bevorzugt im für das menschliche Auge unsichtbaren Wellenlängenbereich, insbesondere im Infrarotbereich, gebildet. Darüber hinaus ist es auch möglich, die Signale 111, 112 durch akustische Signale, bevorzugt im für das menschliche Ohr nicht wahrnehmbaren Frequenzbereich, insbesondere im Ultraschallbereich, zu bilden. Der Frequenzbereich der Signale 111, 112 liegt daher in etwa im Bereich über 20 kHz. Sämtliche von den einzelnen Sendevorrichtungen 113 abgegebenen Signale 111, 112 sind dabei eindeutig voneinander unterscheidbar, wodurch die jeweilige Sendevorrichtung 113 aus einer Mehrzahl von Sendevorrichtungen 113 erkannt und/oder die Position der jeweiligen Sendevorrichtung 113 bestimmt werden kann. Die Frequenz der gegebenenfalls in Art von Funksignalen bzw. elektromagnetischen Wellen abgestrahlten Signale 111, 112 liegt bevorzugt im Bereich von mehr als 1 MHz.

Ebenso können die bevorzugt durch Lichtstrahlen gebildeten, von der Zielscheibe 105 abgegebenen Signale 107, 108 durch Funkwellen bzw. elektromagnetische Wellen und/oder durch akustische Wellen, insbesondere Ultraschallwellen, gebildet sein.

Die Vorrichtung 104 umfaßt weiters zumindest eine Empfangseinheit 114 für die von der Signalquelle 106 in der Nähe der Zielscheibe 105 abgegebenen Signale 107, 108. Die Empfangseinheit 114 ist dem Benutzer 102, insbesondere der vom Benutzer 102 getragenen Waffe 103 zugeordnet bzw. auf dieser angeordnet. Die Empfangseinheit 114 auf der Waffe 103 umfaßt bevorzugt zumindest einen positionsempfindlichen Sensor 115, über welchen die Position der von diesem empfangbaren Signale 107, 108 relativ zu einer Schußlinie 116 und somit relativ zur Zielscheibe 105 bzw. relativ zu deren Solltreffstelle erfaßt werden kann. Der positionsempfindliche Sensor 115 ist bevorzugt durch einen optoelektrischen Sensor 115 gebildet, der die auftreffenden Signale 107,108 in Form von Licht in elektrische Energie umformt. Die jeweilige Auftreffposition der Signale 107, 108 auf dem fotoelektrischen Sensor 115 ist dabei durch eindeutig unterscheidbare, vom Sensor 115 abgegebene elektrische Spannungen erfaßbar. In Abhängigkeit der Auftreffpositionen der Signale 107, 108 kann dann die Position der Waffe 103 relativ zur Zielscheibe 105 errechnet werden. Insbesondere ist es dadurch auch möglich, den Bewegungsverlauf der Waffe 103 relativ zur Zielscheibe 105 vor der Schußabgabe zu erfassen und aufzuzeichnen. Ebenso ist es durch die Positionsfeststellung der Waffe 103 relativ zur Zielscheibe 105 möglich, Fehleinstellungen bzw. Ungenauigkeiten der Waffe 103 zu detektieren. Dies wird dadurch erreicht, indem die Waffenposition mit der tatsächlichen EinschuBstelle an der Zielscheibe 105 verglichen wird. Durch die Gegenüberstellung der tatsächlichen Einschußstelle und der Waffenposition zum Zeitpunkt der Schußabgabe ist es daher auch gezielt möglich, exakte Justierarbeiten z.B. am Zielfernrohr der Waffe 103 vorzunehmen, um bestmögliche Schießergebnisse mit optimal eingestellten Waffen 103 erreichen zu können.

Für den Fall, daß von der Vorrichtung 104 akustische Signale 107, 108 und/oder Funksignale bzw. elektromagnetische Wellen zur Ermittlung der insbesondere räumlichen Lage und/oder der Bewegung der Waffe 103 gegenüber der Zielscheibe 105 eingesetzt werden, so ist die dazu korrespondierende Empfangseinheit 114 durch eine akustische Empfangseinheit 114, z.B. in Art eines piezoelektrischen Mikrofons und/oder durch einen Funkwellenempfänger gebildet, mit welchem Relativpositionen zur Gegenstelle ermittelt werden können.

Selbstverständlich ist es auch möglich, den positionsempfindlichen Sensor 115 bzw. die Empfangseinheit 114 im Bereich der Zielscheibe 105 vorzusehen und die Signalquelle 106 für die Signale 107, 108 der Waffe 103 zuzuordnen, wobei die Signalquelle 106 die abgestrahlten Signale 107, 108 in Richtung zur Zielscheibe 105 bzw. in Richtung zur Empfangseinheit 114 sendet.

Weiters weist die Vorrichtung 104 ein Richtsystem 117 auf, welches der Signalquelle 106 und/oder der Empfangseinheit 114 zugeordnet ist. Mit diesem Richtsystem 117 wird erreicht, daß die von der Signalquelle 106 abgegebenen Signale 107, 108 zur Bestimmung der Lage der Waffe 103 gegenüber der Zielscheibe 105 bei möglichst vielen Standorten des Benutzers 102 mit der Waffe 103 von der Empfangseinheit 114 empfangen werden können und somit der Benutzer 102 für die Aufzeichnung der Waffenbewegung bzw. Anvisierbewegung weitgehend standortunabhängig ist. Das Richtsystem 117 umfaBt hierfür eine Nachführvorrichtung 118 und/oder eine Ortungsvorrichung 119 zumindest zur Bestimmung zweidimensionaler Positionskoordinaten der Waffe 103, bevorzugt jedoch zur Bestimmung der räumlichen Lage der Waffe 103 im Raum. Mittels der Ortungsvorrichtung 119 ist die jeweilige Ist-Position der Empfangseinheit 114 erfaßbar und die Signalquelle 106 bzw. die Signale 107, 108 mittels der Nachführvorrichtung 118 in Richtung zur Empfangseinheit 114 bzw. in Richtung zur Waffe 103 bzw. zum Benutzer 102 lenkbar.

Die Nachführvorrichtung 118 zur Nachführung der Signale 107, 108 bzw. der Signalquelle 106 in Richtung zur zugehörigen Empfangseinheit 114 bzw. in die durch die Empfangseinheit 114 vorgegebene Ist-Lage umfaßt die zuvor beschriebene Sendevorrichtung 113 für zumindest ein weiteres, drahtlos übertragbares Signal 111, 112, das für den Empfang durch die Empfangsvorrichtung 110 ausgebildet ist. Die Nachführvorrichtung 118 ist dabei in der Lage, einen Ausgangspunkt bzw. einen Abstrahlpunkt der Sendevorrichtung 113 bzw. zumindest die zum Ausgangspunkt bzw. Abstrahlpunkt weisende Richtung zu ermitteln und mittels einer Stellvorrichtung 120 die Empfangbarkeit der ersten Signale 107, 108 von der Empfangseinheit 114 zu gewährleisten.

Die Sendevorrichtung 113 weist bevorzugt eine bestimmte Richtcharakteristik bzw. einen bestimmten Abstrahlwinkel im Bereich zwischen 0° und 150° auf, sodaß die abgestrahlten, weiteren Signale 111, 112 sicher von der Empfangsvorrichtung 110 empfangen werden können und trotzdem eine exakte Nachführung der ersten Signale 107, 108 in Richtung zur Empfangseinheit 114 erzielbar ist.

Die Empfangsvorrichtung 110 weist zur Abdeckung eines weitläufigen Empfangsbereiches der Signale 111, 112 zumindest eine Antenne 121 auf, welche zur Gattung der Empfangsantennen zählt und z.B. durch Stabantennen und/oder durch Parabolantennen - wie dies schematisch dargestellt ist - gebildet sein kann. Darüber hinaus kann die Antenne 121 durch eine drehbar gelagerte Überwachungsantenne gebildet sein, welche den zugeteilten Empfangsbereich fortlaufend überwacht. Die weiteren Signale 111, 112 können z.B. auch in Art von Peilstrahlen ausgebildet sein, über welche der Nachführvorrichtung 118 eine punktgenaue Nachführung der ersten Signale 107, 108 in Richtung zur Empfangseinheit 114 ermöglicht ist.

Ein wesentlicher Vorteil der Nachführvorrichtung 118 liegt darin, daß der Benutzer 102 der Waffe 103 in seinem Standort relativ zur Zielscheibe 105 nicht gebunden ist, sondern vielmehr frei beweglich ist und die Anvisierung der Zielscheibe 105 in einem weitläufigen Winkelbereich 122 erfolgen kann und dabei immer noch die Bewegung der Waffe 103 relativ zur Zielscheibe 105 über die Vorrichtung 104 bzw. die Empfangseinheit 114 aufgezeichnet werden kann.

Der von der Nachführvomchtung 118 abdeckbare Winkelbereich 122 beträgt bevorzugt in etwa 10° bis 150°.

Die Stellvorrichtung 120 zur Ausrichtung der Signale 107, 108 in Richtung zur Empfangseinheit 114 auf der Waffe 103 weist hierfür zumindest eine vertikale Drehachse 123 auf, um welche die Signalquelle 106 drehbar gelagert ist. Gegebenenfalls weist die Stellvorrichtung 120 auch eine horizontale Drehachse 124 auf, um welche die Signalquelle 106 ebenso drehbar gelagert ist. Durch die in zwei senkrecht zueinander verlaufenden Raumrichtungen angeordneten Drehachsen 123, 124 ist es möglich, die von der Signalquelle 106 abgegebenen Signale 107, 108 auf bestimmte Punkte im Raum zu lenken. Unter diesen Punkten sind dabei die Positionswerte der Waffe 103 bzw. der Empfangseinheit 114, bezogen auf eine Fläche und/oder einen Raum, zu verstehen. Ein weiterer durch die Nachführvomchtung 118 bewirkter Vorteil liegt darin, daß die Empfangseinheit 114 bzw. der positionsempfindliche, photoelektrische Sensor 115 sehr klein ausgeführt werden kann, wodurch für den Benutzer 102 keinerlei Sichtbehinderungen beim Anvisieren als auch keinerlei nachteilige Veränderungen der Gewichtsverhältnisse der Waffe 103 auftreten.

Gegebenenfalls kann die Stellvorrichtung 120 für die Signalquelle 106 auch eine Längsführungsbahn aufweisen, die eine Verschiebung der Signalquellen 106 in vertikaler Richtung ermöglicht, wodurch die Signale 107, 108 unabhängig von der Höhenposition der Empfangseinheit 114 im wesentlichen immer senkrecht auf den positionsempfindlichen Sensor 115 auftreffen.

Die Nachführvorrichtung 118 bzw. Ortungsvorrichtung 119 erlaubt es also, daß der Benutzer 102 der Waffe 103 auch schiefwinkelig zur Flachseite der Zielscheibe 105 stehen kann, und trotzdem die Bewegung der Waffe 103 relativ zur Zielscheibe 105, zumindest rund um deren Solltreffstelle, ermittelt und aufgezeichnet werden kann. Insbesondere ist es durch die Nachführvorrichtung 118 bzw. Ortungsvorrichtung 119 ermöglicht, daß die Schußlinie 116 bzw. eine dementsprechende Anvisierlinie bezogen auf die Ebene der Zielscheibe 105 von 90° abweichen kann, was vor allem bei standortflexiblen Benutzern 102, wie es bei Schießübungen fallweise erforderlich ist, von Vorteil ist.

Die Nachführvorrichtung 118 arbeitet zumindest mit zweidimensionalen Positionskoordinaten, kann jedoch auch für die Bestimmung dreidimensionaler Raumkoordination zur Nachführung der Signalquelle 106 relativ zur zugehörigen Empfangseinheit 114 ausgebildet sein. Selbstverständlich ist es auch möglich, der Empfangseinheit 114 die Nachführvorrichtung 118 zuzuordnen.

Gegebenenfalls kann die Vorrichtung 104 auch eine Entfemungsmeßvorrichtung 125 umfassen. Die Entfemungsvorrichtung 125 kann dabei der Empfangseinheit 114 oder der Signalquelle 106 bzw. der Zielscheibe 105 zugeordnet sein und ermöglicht die Ermittlung der aktuellen Entfernung zwischen der Empfangseinheit 114 und der zugehörigen Signalquelle 106. Die Entfernungsmeßvorrichtung 125 kann dabei jegliche aus dem Stand der Technik bekannte Meßprinzipien einsetzen. So ist es z.B. möglich, anhand der Laufzeit der ausgesendeten Signale 111, 112 und gegebenenfalls nachfolgend durch Reflexion wiederum die empfangenen Reflexionssignale die Entfernung zur entsprechenden Gegenstelle zu ermitteln. Es ist z.B. möglich, über die Sendevorrichtung 113 Ultraschallsignale auszusenden, welche im Bereich der entsprechenden Zielscheibe 105 reflektiert werden und als Echosignale zeitverzögert wiederum von einem akustischen Signalempfänger der Empfangseinheit 114 auf der Waffe 103 empfangen werden können. Über die ermittelte Signallaufzeit der ausgesandten Signale 111, 112 kann dann auf die Entfernung zur Zielscheibe 105 geschlossen werden.

Es können aber auch ausgehend vom Bereich der Zielscheibe 105 bzw. der Signalquelle 106 Entfernungsmeßsignale abgesandt werden, die von der Gegenstelle bzw. von der Empfangseinheit 114 zurückgesandt werden und somit wiederum von der Entfemungsmeßvorrichtung 125 bzw. von den Antennen 121 aufgefangen werden können und somit ein Maß für die Entfernung zur Waffe 103 bzw. zur Empfangseinheit 114 vorliegt.

Vor allem bei antiparallel bzw. schiefwinkelig zueinander verlaufenden Signalen 107, 108 bzw. dementsprechenden Strahlen kann die Stellvorrichtung 120 von der Entfernungsmeßvorrichtung 125 entsprechend der jeweils festgestellten Entfernung ansteuert werden. Durch die Wirkverbindung der Entfennungsmeßvorrichtung 125 mit der Stellvorrichtung 120 wird erreicht, daß die ausgehend von der Signalquelle 106 in Richtung zur Empfangseinheit 114 sich nähernden bzw. konvergierenden Signale 107, 108 im Bereich der Empfangseinheit 114 bzw. des positionsempfindlichen Sensors 115 relativ nahe beieinander eintreffen. Die Distanz zwischen den Signalen 107, 108 im Bereich der Empfangseinheit 114 beträgt einige wenige Millimeter bis einige Zentimeter, um möglichst kleine positionsempfindliche Sensoren 115 einsetzen zu können.

Zur Erzielung dieser relativ nahe beieinander liegenden Auftreffstellen der Signale 107, 108 auf der Empfangseinheit 114 ist die Entfemungsmeßvorrichtung 125 gegebenenfalls über eine Steuervorrichtung mit der Stellvorrichtung 120 wirkungsverbunden, wobei hierfür jede der einzelnen Signalquellen 106 um eine vertikale Achse 126 drehbar gelagert ist, sodaß der Abstrahlwinkel zwischen den beiden bevorzugt gebündelten Signalen 107, 108 in Abhängigkeit der Entfernung zur Empfangseinheit 114 verändert werden kann. Jede der einzelnen Signalquellen 106 ist dabei gesteuert von der Entfemungsmeßvorrichtung 125 um zumindest eine weitere vertikale Achse 126 rotatorisch gelagert. In Abhängigkeit der festgestellten Entfernung wird der Strahlenverlauf der Signale 107, 108 auch so verändert, daß deren Kreuzungspunkt in einer Distanz von der Signalquelle 106 angeordnet ist, die größer ist als die Distanz zwischen der Signalquelle 106 und der Empfangseinheit 114. Bevorzugt verlaufen die Signale 107, 108 in einer vertikal oder horizontal ausgerichteten Ebene.

Die Stellvorrichtung 120 zur Nachführung der Signale 107, 108 an die Schußabgabeposition des Benutzers 102 bzw. an die Position der Waffe 103 umfaßt mehrere in unterschiedlichen Raumrichtungen verlaufende Schwenkachsen, Kardangelenke und/oder Längsfühmngsvorrichtungen mit Führungsschlitten bzw. demgemäß aufgebaute Traggestelle, welche bevorzugt von elektromotorischen Antriebsvorrichtungen in Bewegung gesetzt werden können. Die Antriebsvorrichtungen sind dabei von der Nachführvorrichtung 118 bzw. von der Entfernungsmeßvorrichtung 125 gesteuert.

Die Trainingsanlage 101 umfaßt mehrere Zielscheiben 105 bzw. mehrere Schießstände 127 bis 129. Die vorhergehend beschriebene Nachführvorrichtung 118 ist insbesondere am Schießstand 127 ausgebildet bzw. an diesem dargestellt.

Am weiteren Schießstand 128 ist eine andere Ausführung der Nachführvorrichtung 118 für die Signale 107, 108 ausgebildet. Diese Nachführvorrichtung 118 umfaßt auch eine Ortungsvorrichtung 119 bzw. ist der Nachführvorrichtung 118 die Ortungsvorrichtung 119 wirkungsmäßig vorgeordnet.

Zur Ortungsvorrichtung 119 zählen zumindest eine weitere Sendevorrichtung 130, bevorzugt zwei weitere Sendevorrichtungen 130,131, dessen drahtlos, bevorzugt per Funk übertragenen Signale 132, 133 von zumindest einer diesen zugeordneten Empfangsvorrichtung 134, bevorzugt zwei Empfangsvorrichtungen 134, 135, gegebenenfalls jedoch auch von drei Empfangsvorrichtungen 134, 135, 136 empfangbar sind.

Bei Verwendung mehrerer Empfangsvorrichtungen 134 bis 136 sind diese räumlich voneinander getrennt angeordnet. Bei Einsatz mehrerer, eindeutig voneinander unterscheidbarer Signale 132, 133 weist jede der Empfangsvorrichtungen 134 bis 136 für jede der empfangbaren Signale 132, 133 eine eigene Empfangseinheit auf, sodaß mehrere Signale 132, 133 gleichzeitig erfaßt werden können.

Die Empfangsvorrichtungen 134 bis 136 können dabei durch sämtliche aus dem Stand der Technik bekannte Antennenvorrichtungen, wie z.B. Parabolantennen, Stabantennen oder dgl. gebildet sein.

Sofem mehrere Sendevorrichtungen 130,131 zur Abstrahlung der Signale 132, 133 eingesetzt sind, so sind auch diese zumindest geringfügig räumlich voneinander getrennt angeordnet. Bevorzugt ist die Sendevorrichtung 130, 131 auf der Waffe 103 angeordnet. Darüber hinaus sind die einzelnen Sendevorrichtungen 130, 131 in Längsrichtung der Waffe 103 bzw. in Richtung einer gedachten Schußlinie 116 distanziert zueinander angeordnet. Die zugehörigen Empfangsvorrichtungen 134 bis 136 sind im Umgebungsbereich der Trainingsanlage 101 ortsfest montiert.

Selbstverständlich ist es auch möglich, eine dazu inverse Anordnung einzusetzen, d.h. die Empfangsvorrichtung 134 bis 136 auf der Waffe 103 und die Sendevorrichtung 130, 131 im Umgebungsbereich der Schießstände 127 bis 129 anzuordnen.

Zumindest die Empfangsvorrichtung 134, 135, 136 ist über Leitungen 137 bis 139 mit einer Steuer- und/oder Auswertevorrichtung 140 leitungsverbunden. Anhand der von den Empfangsvorrichtungen 134 bis 136 abgegebenen Empfangssignale berechnet die Steuer- und/oder Auswertevorrichtung 140 die Position der Waffe 103 bzw. des Benutzers 102 im Umgebungsbereich der Trainingsanlage 101. Gegebenenfalls berechnet die Steuer- und/oder Auswertevorrichtung 140 bei Einsatz zumindest zweier Signale 132, 133 auch die Orientierung bzw. Ausrichtung der Waffe 103 bezogen auf die Zielscheibe 105 des jeweiligen Schießstandes 127 bis 129.

Die Steuer- und/oder Auswertevorrichtung 140 kann dabei zweidimensionale Ortskoordinaten und/oder dreidimensionale Raumkoordinaten der Waffe 103 bzw. des Benutzers 102 im Raum bzw. in der Trainingsanlage 101 ermitteln. Zusätzlich kann durch Einsatz von zumindest zwei Sendevorrichtungen 130, 131 die Winkellage der Schußlinie 116 relativ zur Ebene der Zielscheibe 105 erkannt werden.

Anhand der von der Steuer- und/oder Auswertevorrichtung 140 ermittelten Raumkoordinaten und/oder Ortskoordinaten und/oder Orientierungswerte der Waffe 103 bzw. der auf dieser angeordneten Empfangseinheit 114 steuert die Steuer- und/oder Auswertevorrichtung 140 die Stellvorrichtung 120 des jeweiligen Schießstandes 127 bis 129 für die Signalquelle 106 an. Hierzu sind die einzelnen Schießstände 127 bis 129 bzw. deren Stellvorrichtungen 120 über zumindest eine Leitung 141 bis 143 mit der Steuer- und/oder Auswertevorrichtung 140 leitungsverbunden. Mittels dieser Stellvorrichtungen 120 werden die Signalquellen 106 für die Signale 107, 108 derart ausgerichtet, daß diese unabhängig von der jeweiligen Standposition des Benutzers bzw. unabhängig von der Größe des Benutzers 102 und/oder unabhängig von der Halteposition der Waffe 103 von der Empfangseinheit 114 auf der Waffe 103 empfangen werden können und somit eine sichere Auswertung und/oder Aufzeichnung des Anvisiervorganges erreicht ist. Bei schiefwinkelig bzw. antiparallel zueinander abgestrahlten Signalen 107, 108 umfaßt die Stellvorrichtung 120 auch jeweils um die Achsen 126 verschwenkbare Signalquellen 106, wobei der eingestellte Schwenkwinkel der einzelnen Signalquellen 106 in Abhängigkeit der Entfernung zur Empfangseinheit 140 bestimmt ist.

Selbstverständlich ist es auch möglich, zumindest einzelne Schießstände 127 bis 129, beim gezeigten Ausführungsbeispiel den Schießstand 129, für eine ortsgebundene Schußabgabeposition bzw. Anvisierungsposition auszubilden. Insbesondere sind dabei der Signalquelle 106 und der Empfangseinheit 114 bzw. dem Benutzer 102 in Abhängigkeit der Distanz zwischen Zielscheibe 105 und Benutzer 102 bzw. Waffe 103 vordefinierte bzw. bestimmte Aufstandsflächen bzw. Anordnungspositionen zugeordnet.

Die Ermittlung der Ortskoordinaten und/oder Raumkoordination und/oder Ausrichtungswerte der Waffe 103 bzw. des Benutzers 102 erfolgt nach den aus dem Stand der Technik bekannten Methoden, wie z.B. durch Laufzeitmessungen der abgesandten Signale 132, 133. Dabei können die Signale 132, 133 kontinuierlich oder diskontinuierlich von der Waffe 103 abgestrahlt werden. Ausgelöst von einem Initialisierungssignal, das beispielsweise durch ein spezielles Funksignal, ein optisches Signal, wie z.B. einen Lichtblitz oder dgl., gebildet sein kann, beginnen die einzelnen Empfangsvorrichtungen 134 bis 136 mit einer Zeitmessung und ermitteln jene Zeit, welche verstreicht, bis die mit dem Initialisierungssignal ausgesandten Signale 132, 133 empfangen werden. Ausgehend von den unterschiedlichen Signallaufzeiten zu den verteilt angeordneten Empfangsvorrichtungen 134 bis 136 kann dann auf die Ausgangsposition zurückgerechnet werden. Selbstverständlich ist es aber auch möglich, sämtliche aus dem Stand der Technik bekannten Berechnungsmodelle und/oder sonstige Systeme, wie z.B. globale Positionserfassungssysteme (GPS), einzusetzen.

Weiters weist die Trainingsanlage 101 bzw. weisen einzelne Schießstände 127 bis 129 eine Vorrichtung 144 zum Erschrecken und/oder Ablenken des Benutzers 102 bzw. des Schützen auf. Diese Vorrichtung 144 weist akustische Ausgabevorrichtungen 145 und/oder optische Ausgabevorrichtungen 146 auf. Die akustische Ausgabevorrichtung 145 kann dabei durch ein Signalhorn 147, durch eine Hupe, Sirene, Lautsprecher oder dgl., gebildet sein und ist zur Abgabe leistungsstarker und impulsartiger Laute vorgesehen. Die optische Ausgabevorrichtung 146 kann beispielsweise durch Scheinwerfer 148 und/oder durch Stroboskope oder dgl. zur Abgabe von intensiven bzw. grellen Lichtblitzen gebildet sein. Von der Vorrichtung 144 sind also Licht-und/oder Schallsignale bevorzugt unvorhersehbar und überraschend für den Benutzer 102, z. B. während der Anvisier- bzw. Konzentrationsphase, abgebbar.

Der akustischen und/oder optischen Ausgabevorrichtung 145, 146 ist eine Verstellvorrichtung 149 zur Veränderung der Position zumindest einer Ausgabevorrichtung 145, 146 zugeordnet. Die Verstellvorrichtung 149 kann hierzu Führungsschlitten und/ oder Drehkränze umfassen, auf welchen die Ausgabevorrichtung 145, 146 angeordnet ist. Bevorzugt ist eine elektrische Antriebsvorrichtung der Verstellvorrichtung 149 und/oder den Ausgabevorrichtungen 145, 146 zugeordnet und mit der Steuer- und/oder Auswertevorrichtung 140 leitungsverbunden, wodurch die Antriebsvorrichtung von der Steuer- und/oder Auswertevorrichtung ansteuerbar ist.

Insbesondere ist es dadurch möglich, die Ausgabevorrichtung 145, 146 für den Benutzer 102 bzw. Schützen unvorhersehbar zu aktivieren und somit für diesen eine Schrecksituation hervorzurufen. Insbesondere ist es auch möglich, mittels der Verstellvorrichtung 149 die Ausgabevorrichtungen 145, 146 aus einem z.B. hinter der Zielscheibe 105 verborgenen Bereich in einen Einsatzbereich, in welchem deren Wirkung zur Geltung kommt, zu verstellen. Die Aktivierung und/oder Verstellung der Vorrichtung 144 in die Aktivposition ist bevorzugt von der Steuer-und/oder Auswertevorrichtung 140 gesteuert.

Die Empfangseinheit 114 bzw. deren Auswerteeinheit und/oder die zentrale Steuer- und/oder Auswertevorrichtung 140 ist zur zeitsynchronen Aufzeichnung der Signalabgabe und/oder -dauer der Vorrichtung 144 ausgebildet, sodaß durch Schrecksituationen bedingte ruckartige Waffenbewegungen erhoben werden können.

Selbstverständlich ist es auch möglich, den einzelnen Schießständen 127 bis 129 weitgehend unabhängig arbeitende Schießstandrechner 150 bis 152 zuzuordnen, welche über die Leitungen 141 bis 143 mit dem Zentralrechner bzw. der zentralen Steuer- und/oder Auswertevorrichtung für den Datenaustausch vernetzt sind. Jeder einzelne Schießstandrechner 150 bis 152 übernimmt dabei vor allem die Verwaltungs- und/oder Berechnungsaufgaben an dem jeweiligen Schießstand 127 bis 129.

Durch die Kopplung der Vorrichtung 144 mit dem entsprechenden Schießstandrechner 151 und/oder mit der zentralen Steuer- und/oder Auswertevorrichtung 140 können die Auswirkungen der Vorrichtung 144 zum Erschrecken und/oder Ablenken des Schützen ermittelt werden. Insbesondere ist es durch eine Gegenüberstellung der üblicherweise spiralförmigen Waffenbewegung zur Anvisierung der Solltreffstelle auf der Zielscheibe mit den Zeitpunkten der Aktivierung der Vorrichtung 144 ermöglicht, z.B. die Gelassenheit bzw. Nervosität eines Schützen zu bestimmen. Ist nämlich zum Zeitpunkt der Aktivierung der Vorrichtung 144 eine impulsartige, abrupte Waffenbewegung erfaßt worden, so kann davon ausgegangen werden, daß der Schütze dementsprechend erschrocken ist und somit u.a. auch eine Qualifizierung des Schützen ermittelt werden kann. Die Trainingsanlage 101 ist daher insbesondere auch zum Training und/oder zur Bewertung von Anwärtern für Sondereinsatzgruppen im öffentlichen Sicherheitsdienst einsetzbar. Im besonderen können dadurch Vergleiche zwischen der Gelassenheit eines Schützen und dessen Treffersicherheit sowie die benötigte Anvisierzeit gegenübergestellt werden und eine Qualifizierung des Benutzers 102 geprüft bzw. eine entsprechende Klassifizierung getroffen werden.

Gegebenenfalls können am Benutzer 102 der Waffe 103 auch Mittel 153 zur Überwachung und/oder Erfassung dessen Körperfunktionen vorgesehen sein. Hierzu können Puls und/oder Blutdruckmeßvorrichtungen am Körper des Schützen angeordnet sein, welche die entsprechenden Meßwerte drahtlos und/oder drahtgebunden, z.B. auch über die Sendevorrichtungen 130, 131 an den Schießstandrechner 150 bis 152 oder an die Steuer- und/oder Auswertevorrichtung 140 übergeben. Durch Gegenüberstellung all dieser Meßwerte wie Blutdruck, Pulsschlag, Bewegungsablauf, Anvisierzeit, Trefferlage und dgl. kann eine zuverlässige Einstufung des Schützen erreicht werden.

Die Trainingsanlage 101 kann dabei gleichzeitig von mehreren Schützen verwendet werden, ohne daß dadurch gegenseitige Beeinflussungen der einzelnen Schießstände 127 bis 129 auftreten.

Die Steuer- und/oder Auswertevorrichtung 140 kann beispielsweise durch einen Personal-Computer gebildet sein, der abseits der Trainingsanlage 101 plaziert ist. Die in der zentralen Steuer- und/oder Auswertevorrichtung 140 zusammenlaufenden Daten der Trainingsanlage 101 können in dieser weiterverarbeitet und gegebenenfalls Statistiken und/oder Trendanalysen erstellt werden. Der Steuer- und/oder Auswertevorrichtung 140 ist hierfür auch zumindest eine optische und/oder akustische Ausgabevorrichtung 154 zugeordnet. Ebenso ist der Steuer- und/oder Auswertevorrichtung 140 zumindest eine Eingabevorrichtung 155 zugeordnet. Die Ausgabevorrichtung 154 kann dabei durch herkömmliche Bildschirme und/oder durch Flüssigkeitskristallanzeigen gebildet sein. Zur großflächigen und gut einsehbaren Darstellung von Ausgabedaten der Steuer- und/oder Auswertevorrichtung 140 kann dieser auch ein Videoprojektor 156 zugeordnet sein, der die entsprechenden Daten, wie z.B. Trefferergebnisse, Bewegungsabläufe, Statistiken und dgl. auf eine Leinwand 157 projiziert, die von den Benutzern 102 und/oder von den Schützen und/oder von Zuschauern an der Trainingsanlage 101 eingesehen werden kann.

Zusätzlich kann auch eine akustische Ausgabevorrichtung 154, insbesondere ein Lautsprecher 158, vorgesehen sein, über welchen Durchsagen und/oder akustische Informations- und/oder Datenweitergaben ermöglicht sind.

Über die Eingabevorrichtung 155 sind Betriebsarten wählbar und/oder Betriebsparameter veränderbar. Als Eingabevorrichtung 155 können dabei jegliche aus dem Stand der Technik bekannte Tastaturen, Steuerknüppel, Zeigevorrichtungen und dgl. eingesetzt werden.

Zweckmäßigerweise werden auch die von der Empfangseinheit 114 aufgenommenen Positions- bzw. Bewegungssignale der Waffe 103 zeitsynchron zu einer auf die Leinwand 157 projizierten Zieldarstellung auf diese übertragen und dargestellt.

Weiters kann die Steuer- und/oder Auswertevorrichtung 140 und/oder jeder einzelne der Schießstandrechner 150 bis 152 über ein globales Netzwerk 159, insbesondere über das Intemet 160, mit weiteren Trainingsanlagen 101 und/oder Schießständen 127 bis 129 vernetzt sein. Über dieses globale Netzwerk 159 können Trefferergebnisse und/oder Bewegungsdaten und/oder Bilddaten und/oder Tondaten mit weitläufig voneinander distanzierten Anlagen ausgetauscht werden. Ebenso ist es dadurch möglich, länderbezogene Vergleichswettbewerbe gleichzeitig an unterschiedlichen Orten auszuführen und die Kommunikation über das globale Netzwerk 159, wie z.B. das Internet 160, aufzubauen.

Weiters ist es möglich, Schießstände 127 bis 129 auszubilden, welche mehrere Zielscheiben 105 aufweisen und somit sogenannte Duellscheiben realisieren. Mehrere dieser Zielscheiben 105 der Duellscheibenanordnung weisen dabei zumindest je eine Signalquelle 106 zur Absendung der Signale 107, 108 auf. Bei diesen Duellscheibenanlagen ist also eine Vervielfachung der Signalquellen 106 gegeben, wodurch für jede dieser Zielscheiben 105 die Bewegung der Waffe 103 bei der Anvisierung vor der Schußabgabe erfaßt werden kann. Die einzelnen Signalquellen 106 pro Zielscheibe 105 der Duellschießscheibenanordnung sind dabei auf eine vorgegebene Standposition des Benutzers bzw. auf eine vordefinierte Abschußposition der Waffe 103 eingerichtet. Es ist aber auch möglich, jedem dieser Signalquellen 106 eine in Abhängigkeit der Waffenposition gesteuerte Stellvorrichtung 120 zuzuordnen, wodurch die Anvisierposition und/oder Schußabgabeposition flexibel wird. Bei einer Mehrzahl von Zielscheiben 105 pro Schütze bzw. Benutzer 102 ist also bevorzugt eine Vervielfachung der Senderpaare bzw. der Signalquellen 106 erforderlich. Die von den einzelnen Signalquellen 106 abgestrahlten Signale 107, 108 sind dabei bevorzugt eindeutig voneinander unterscheidbar.

Gegebenenfalls ist es auch möglich, in der Trainingsanlage 101 bzw. bei den einzelnen Schießständen 127 bis 129 wechselnde Ziele zu verwenden. So ist es z.B. möglich, die Zielscheiben 105 in Art von Leinwänden 157 auszubilden, auf welche wechselnde Darstellungen bzw. auch bewegte Ziele projiziert werden. Weiters ist es möglich, den einzelnen Zielscheiben 105 bzw. Zielobjekten beliebige, aus dem Stand der Technik bekannte, automatische Abtastvorrichtungen zur Ermittlung der Trefferlage zuzuordnen.

Zur Vermeidung von fehlerhaften Signalzuordnungen innerhalb der Trainingsanlage 101 können entweder von den einzelnen Schießständen 127 bis 129 bzw. Zielscheiben 105 unterschiedlich codierte Signale 107, 108 abgestrahlt werden. Die Codierung der Signale 107, 108 kann dabei mittels bestimmter Frequenzen, Amplituden, Impulsfolgen und dgl. erreicht werden. So ist es z.B. möglich, Lichtsignale unterschiedlicher Wellenlänge und/oder elektromagnetische Wellen in jeweils unterschiedlichen Frequenzbereichen abzusenden, um die Sendestelle aus einer Vielzahl von Sendestellen eindeutig bestimmen zu können.

Weiters ist es zur Verhinderung von fehlerhaften Signalzuordnungen möglich, mechanische Abschirmvorrichtungen 161 anstelle der zuvor beschriebenen elektronischen Abschimmaßnahme vorzusehen. Diese Abschirmvorrichtungen 161 sind insbesondere bei optischen Signalen 107, 108 einsetzbar und werden bevorzugt durch mehrere Blenden 162, 163, welche die Einstrahlung von Strahlen nicht zugehöriger Signalquellen 106 auf die Empfangseinheit 114 verhindern, gebildet. Die Abschirmvorrichtung 161 ist also zur Ausgrenzung von für die Empfangseinheit 114 nicht bestimmten Signalen 107, 108 oder Störstrahlungen vorgesehen und kann demnach durch ein optisches bzw. elektrisches Filter zwischen der Empfangseinheit 114 und der Auswerteeinheit 167 bzw. zwischen der Empfangseinheit 114 und der Signalquelle 106 zur Selektion der Charakteristik der eintreffenden Strahlen bzw. Signale 107, 108 gebildet sein.

Bevorzugt sind die Signale 107, 108 durch gebündelte Lichtstrahlen gebildet, welche beispielsweise von Halbleiterdioden, insbesondere Infrarotdioden, und/oder von Laserdioden, welche Laserlicht abstrahlen, ausgesandt werden. Bevorzugt werden dabei stark fokusierte Lichtsignale eingesetzt, deren Strahldurchmesser einige wenige Millimeter beträgt. Diese fokusierten optischen Signale 107, 108 werden beispielsweise von zumindest einem Laser abgegeben und/oder mittels einer entsprechenden optischen Linsenanordnung generiert.

Wie insbesondere beim Schießstand 128 ersichtlich ist, kann die Zielscheibe 105 und die Signalquelle 106 auf einem gemeinsamen Traggestell angeordnet sein, welches über die Stellvorrichtung 120 in Richtung zur Empfangseinheit 114 einstell- bzw. nachführbar ist.

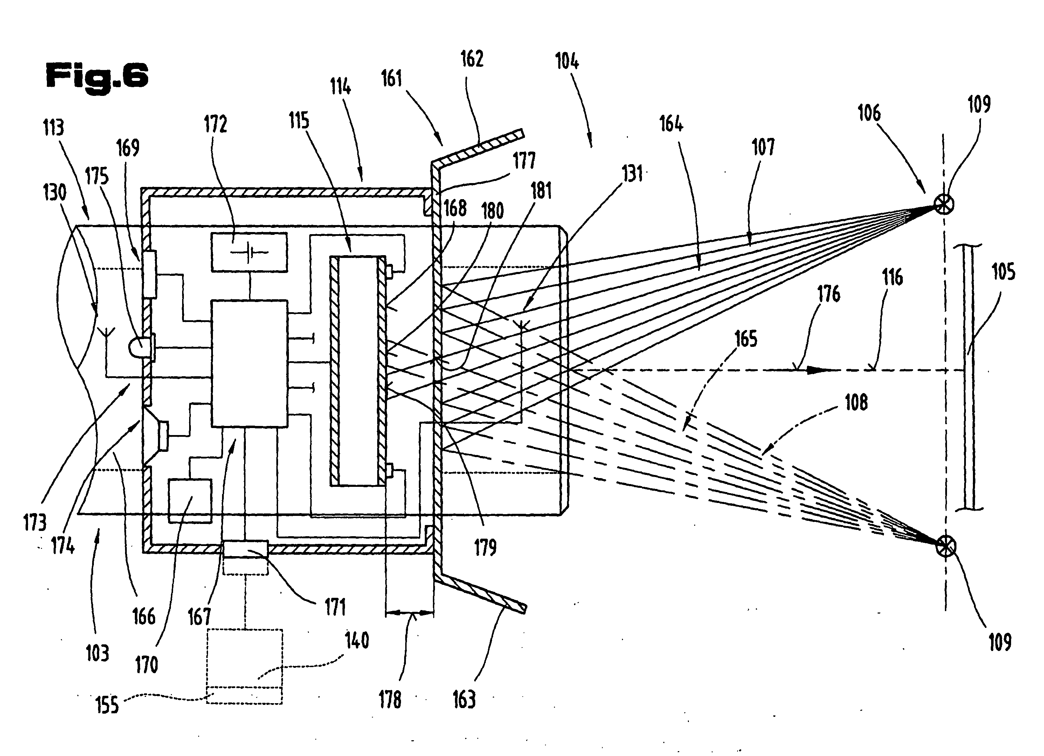

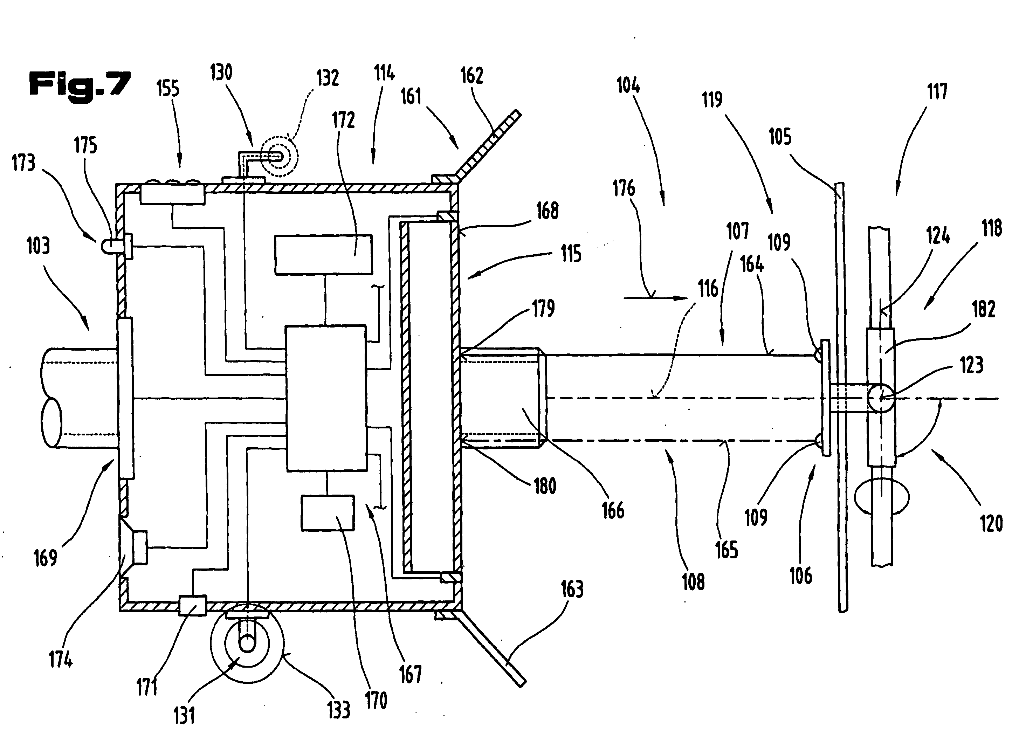

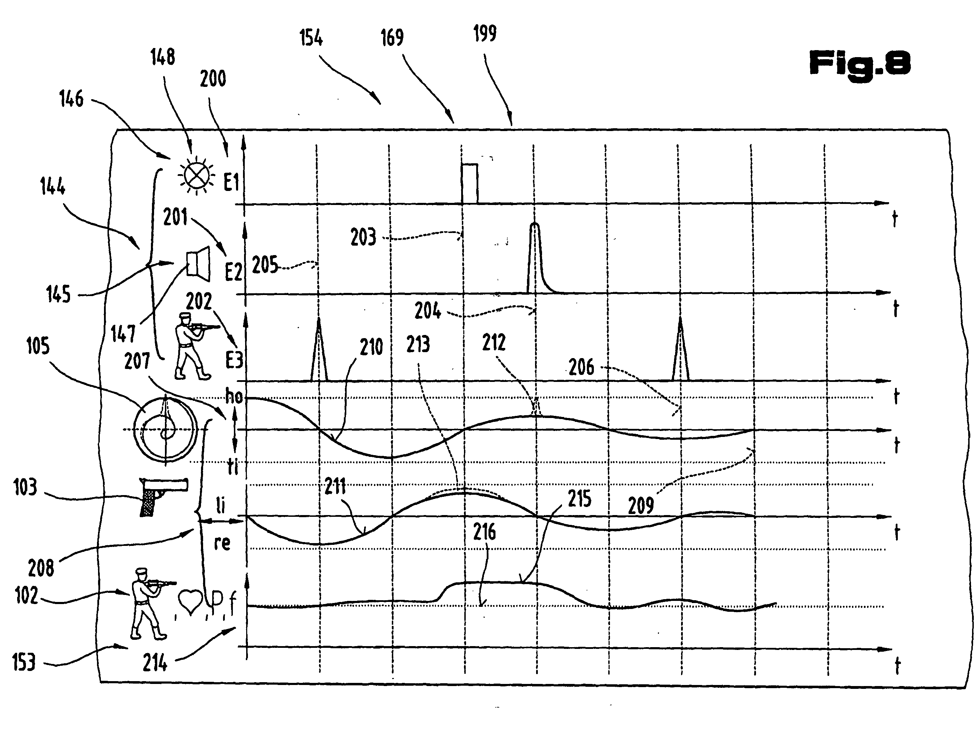

In Fig. 6 ist der Aufbau der Empfangseinheit 114 und der zugehörigen Signalquelle 106 zur Absendung zumindest zweier Signale 107, 108, insbesondere in Art von Lichtstrahlen 164, 165, gezeigt. Die Empfangseinheit 114 ist dabei im vorderen Endbereich der Waffe 103, bevorzugt auf einem Lauf 166 derselben, montiert. Das Gehäuse der Empfangseinheit 114 kann dabei gleichzeitig als Anvisierungsmarke dienen, sofern die Waffe 103 kein Zielfernrohr aufweist. Die Empfangseinheit 114 kann dabei im Mündungsbereich des Laufs 166 angeordnet sein, oder aber auch im Bereich des Schaftes bzw. Griffes der Waffe 103 plaziert sein.

Im Gehäuse der Emfangseinheit 114 ist der positionsempfindliche, photoelektrische Sensor 115 gehaltert. Die Anschlußpins des Sensors 115 sind mit einer Auswerteeinheit 167, die beispielsweise durch einen Mikrocontroller und/oder durch programmierbare Gatteranordnungen gebildet sein kann, leitungsverbunden. Die vom positionsempfindlichen, photoelektrischen Sensor 115 gelieferten elektrischen Signale sind proportional den jeweiligen Auftreffstellen der Lichtstrahlen 164, 165 auf einer Meßfläche 168 zugeordnet. Die vom Sensor 115 generierten bzw. abgegebenen elektrischen Spannungssignale werden von der Auswerteeinheit 167 ausgewertet und als Positionsinformation, z.B. in Art von Ortskoordinaten und/oder in Art von Vektoren, bereitgestellt. Zumindest die Positionsdaten der eintreffenden Lichtstrahlen 164, 165 werden entweder über die Sendevorrichtung 113 und/oder über die Sendevorrichtungen 130, 131 drahtlos an periphere, elektronische Datenverarbeitungsanlagen, wie z.B. an den entsprechenden Schießstandrechner 150 bis 152 und/oder an die zentrale Steuer- und/oder Auswertevorrichtung 140 weitergeleitet. Die Positionsdaten können jedoch auch an einer unmittelbar an der Empfangseinheit 114 angeordneten Anzeigevorrichtung 169, welche beispielsweise durch ein LCD-Display gebildet ist, ausgegeben werden. Weiters ist es möglich, die Positionsdaten in einer mit der Auswerteeinheit 167 leitungsverbundenen Speichervorrichtung 170 zwischenzuspeichern. In der Speichervorrichtung 170 können auch die Abgabezeitpunkte und/oder die Abgabedauem der Schrecksignale von der Vorrichtung 144 - Fig. 5 - aufgezeichnet werden. Ebenso ist diese Aufzeichnung in einer Speichervorrichtung 170 der Steuer- und/oder Auswertevorrichtung 140 möglich, wobei die Abgabezeitpunkte und/oder Abgabedauern der Schrecksignale systemintern bekannt sind und/oder mittels einem akustischen bzw. einem lichtempfindlichen Sensor erfaßt werden.

Gegebenenfalls weist die Empfangseinheit 114 auch eine Schnittstelle 171 auf, über welche Daten mit der an die Schnittstelle 171 über eine Kabelverbindung ankoppelbaren Steuer-und/oder Auswertevorrichtung 140 ausgetauscht werden können. Insbesondere ist es dadurch möglich, die von der Empfangseinheit 114 aufgenommenen Prozeßdaten in der Speichervorrichtung 170 zwischenzuspeichern und nach erfolgtem SchuBtraining diese über die Schnittstelle 171 auszulesen und gegebenenfalls durch die Steuer- und/oder Auswertevorrichtung weiterzuverarbeiten. Selbstverständlich ist es über die Schnittstelle 171 auch möglich, der Auswerteeinheit 167 geänderte Ablaufprogramme bzw. neue Betriebsparameter zuzuführen.

Sämtliche elektrischen Komponenten der mobilen Empfangseinheit 114 werden von einer elektrochemischen Energieversorgungsvorrichtung 172, welche beispielsweise durch Akkumulatoren oder Batterien gebildet ist, gespeist.

Bevorzugt umfaßt die Empfangseinheit 114 auch eine Verkantungsanzeige 173, welche entweder direkt durch die Anzeigevorrichtung 169 und/oder durch eigene Anzeigeelemente realisiert ist.

Bevorzugt umfaßt die Verkantungsanzeige 173 jedoch eine akustische Ausgabevorrichtung 174, welche durch sich verändernde Tonfrequenzen, Lautstärken oder Klangbilder eine Annäherung an die Ideallage der Waffe 103 relativ zur Zielscheibe 105 akustisch signalisiert. Die akustische Ausgabevorrichtung 174 ist bevorzugt durch einen Miniaturlautsprecher gebildet, der entsprechend der Verkantung der Waffe 103 relativ zur Zielscheibe 105 von der Auswerteeinheit 167 angesteuert ist. Die Auswerteeinheit 167 ist durch den Empfang von zumindest zwei Lichtstrahlen 164, 165 in der Lage, die Verdrehung der Waffe 103 um deren Längsachse bzw. um eine gedachte Schußlinie 116 zu eruieren und diese für das Schußergebnis nachteilige Halterung der Waffe 103 über die Verkantungsanzeige 173 zu signalisieren. Wird nämlich die Waffe 103 vom Benutzer 102 um deren Längsachse verdreht gehalten, so weicht die anvisierte Solltreffstelle grundlegend von der tatsächlichen Eintreffstelle ab.

Um diese fehlerhafte Grundhaltung der Waffe 103 von vornherein möglichst zu unterdrücken, weist die Empfangseinheit 114 die Verkantungsanzeige 173 auf bzw. ist die Verkantungsanzeige 173 der Empfangseinheit 114 zugeordnet und mit dieser leitungsverbunden. Gegebenenfalls kann die Verkantungsanzeige 173 auch eine optische Ausgabevorrichtung 175 umfassen, welche beispielsweise durch sich verändernde Blinkfrequenzen, Intensitäten und/oder Leuchtfarben die Abweichung von und/oder die Annäherung zur idealen Haltung der Waffe 103 signalisiert. Diese optische Ausgabevorrichtung 175 kann dabei auf der dem Benutzer 102 zugewandten Seite des Gehäuses der Empfangseinheit 114 angeordnet sein, sodaß diese beim Anvisiergang gut eingesehen werden kann. Gegebenenfalls ist es auch möglich, die optische Ausgabevorrichtung 175 der beschriebenen Verkantungsanzeige 173 in das gegebenenfalls vorhandene Zielfernrohr der Waffe 103 zu integrieren.

Darüber hinaus ist es auch möglich, daß die Verkantungsanzeige 173 über eine drahtlose Kommunikationsvorrichtung, welche durch die Sendevorrichtung 130, 131 gebildet sein kann, mit der gegebenenfalls distanziert von der Empfangseinheit 114 angeordneten Auswerteeinheit 167 und/oder der Steuer- und/oder Auswerteeinheit 140 verbunden ist.

Die akustische Ausgabevorrichtung 174 ist bevorzugt ebenfalls auf dem dem Benutzer am nächsten liegenden Wandteil des Gehäuses der Empfangseinheit 114 angeordnet, sodaß die von dieser abgegebenen Tonsignale unverkennbar vom Schützen wahrgenommen werden können.

Im Ausführungsbeispiel nach Fig. 6 ist eine Signalquelle 106 angedeutet, welche Lichtstrahlen 164, 165 absendet, die in Ausbreitungsrichtung eine bestimmte Streuung aufweisen, d.h., die abgesandten Lichtstrahlen 164, 165 verteilen sich zunehmend mit größer werdendem Abstand von der Signalquelle 106, wie dies schematisch durch die in dünnen Linien bzw. in strichpunktierten Linien konisch verlaufenden Strahlenbündel dargestellt ist.

Zur Fokusierung bzw. Verschmälerung dieser gestreuten Strahlenbündel ist dem Sensor 115 bezogen auf eine Schußrichtung - Pfeil 176 - eine Lochblende 177 in einer Distanz 178 vorgeordnet. Insbesondere ist diese Lochblende 177 zur Erzielung kleinflächiger Auftreffstellen 179, 180 der Lichtstrahlen 164, 165 auf der Meßfläche 168 des Sensors 115 vorgesehen und zwischen dem Sensor 115 und der Signalquelle 106 angeordnet.

Üblicherweise beträgt eine Distanz 178 zwischen der Lochblende 177 und der Meßfläche 168 des Sensors 115 je nach Distanz zwischen Empfangseinheit 114 und Signalquelle 106 bzw. je nach Bündelung der Lichtstrahlen 164, 165 einige wenige Millimeter bis mehrere Zentimeter.

Die beiden Flachseiten dieser Lochblende 177 sind dabei im wesentlichen parallel zur Zielscheibe 105 bzw. sind diese quer zur Schußrichtung - gemäß Pfeil 176 - angeordnet. In etwa im Zentrumsbereich der Lochblende 177 ist ein Durchbruch 181 für den Durchtritt der Lichtstrahlen 164, 165 angeordnet, sodaß diese auf die Meßfläche 168 des Sensors 115 auftreffen können. Die Querschnittsabmessungen des Durchbruches 181 betragen dabei wenige Millimeter, sodaß sich relativ kleinflächige, punktförmige Auftreffstellen 179, 180 am Sensor 115 ergeben. Mittels dem Durchbruch 181 wird erreicht, daß nur ein Teil der einzelnen Strahlen eines Lichtstrahles 164, 165 durch die aus undurchscheinendem bzw. lichtabblockendem Material bestehende Lochblende 177 auf dem Sensor 115 auftrifft. Die Lochblende 177 dient also auch zur Reduzierung der auf den Sensor 115 fallenden Lichtmenge bzw. zur Reduzierung der Streuungsweite der Lichtstrahlen 164, 165. Der Lochblende 177 kommt daher eine Filterwirkung bzw. Reduzierwirkung für die Lichtstrahlen 164, 165 zu.

Die Lochblende 177 weist zumindest einen Durchbruch 181 auf. Gegebenenfalls können je Lichtstrahl 164, 165 eigene Durchbrüche 181 vorgesehen sein.

Eine Dicke der Lochblende 177 ist dabei relativ gering gewählt, sodaß auch bei sehr schräg einfallenden Lichtstrahlen 164, 165 kaum Veränderungen im Durchtrittsquerschnitt des Durchbruches 181 auftreten.

Zur Parallelabschirmung sind bevorzugt an den Randbereichen der Lochblende 177 die Blenden 162, 163 angeordnet, welche eine Abschirmung von Lichtstrahlen 164, 165 bewirken, die von benachbarten, nicht zur Positionserfassung dienenden Signalquellen 106 stammen.

Je nach Einfallswinkel der Lichtstrahlen 164, 165 ergeben sich davon abhängige Auftrefistellen 179, 180 auf der Meßfläche 168 des Sensors 115, wodurch die relative Lage bzw. Orientierung der Waffe 103 relativ zur Zielscheibe 105 bestimmbar ist. Zur Vermeidung von Mischlicht werden die Lichtstrahlen 164, 165 bevorzugt zeitlich aufeinanderfolgend aktiviert und deaktiviert, sodaß auch eine eindeutige Positionsbestimmung über den Sensor 115 ermöglicht ist. Insbesondere wird der in strichpunktierten Linien dargestellte Lichtstrahl 165 erst dann von der Signalquelle 106 abgestrahlt, wenn der erste Lichtstrahl 164 deaktiviert wurde. Nach Deaktivierung des Lichtstrahles 165 wird nachfolgend wiederum der Lichtstrahl 164 für eine bestimmte Zeitdauer aktiviert.

Ebenso wie der Steuer- und/oder Auswertevorrichtung 140 die Eingabevorrichtung 155 zugeordnet ist, kann auch der Empfangseinheit 114 eine Eingabevorrichtung 155, beispielsweise in Art von Schaltem und/oder einer Eingabetastatur, zugeordnet sein, über welche Betriebsparameter veränderbar sind oder auch einzelne Werte selektiv abgerufen werden können. Die Eingabevorrichtung 155 kann dabei ständig oder auch wahlweise mit der Empfangseinheit 114 bzw. der Auswerteeinheit 167 verbunden sein. Über diese Eingabevorrichtung 155 ist beispielsweise auch die Distanz zwischen dem Schützen und der Zielscheibe 105 voreinstellbar.

In Fig. 7 ist eine andere Ausführungsvariante der Vorrichtung 104 zur Übermittlung der Bewegung einer Waffe 103, insbesondere zur Ermittlung der Anvisierbewegung einer Schußwaffe vor der Schußabgabe, gezeigt. Hierbei werden von der Signalquelle 106 stark gebündelte Signale 107, 108 bzw. Lichtsignale 164, 165 z.B. in Form von Laserlicht abgestrahlt. Weiters verlaufen diese Lichtstrahlen 164, 165 parallel zueinander und weisen einen kreisförnnigen Strahlquerschnitt auf. Die Querschnittsabmessung der stark gebündelten Lichtstrahlen beträgt in etwa 0,1 mm bis 5 mm. Ein Abstand zwischen den beiden parallel zueinander verlaufenden Lichtstrahlen 164, 165 beträgt ebenso einige wenige Millimeter, bevorzugt 1 mm bis 10 mm. Auch bei dieser Ausführungsvariante werden die Lichtstrahlen 164, 165 bevorzugt aufeinanderfolgend kurzzeitig aktiviert und wiederum deaktiviert, sodaß ein gleichzeitiges Eintreffen mehrerer Lichtstrahlen 164, 165 auf dem Sensor 115 der Empfangseinheit 114 ausgeschlossen ist.

Die Lichtstrahlen 164, 165, ausgehend von der Signalquelle 106 bzw. Lichtquelle 109, sind also hierbei kohärent bzw. stellen diese zusammenhängende Lichtbündel dar. Die Wellenlänge und/oder Schwingungsrichtung und/oder Schwingungsart des ersten Lichtstrahls 164 gegenüber jedem weiteren Lichtstrahl 165 kann dabei auch unterschiedlich sein, um eine eindeutige Erkennung des jeweiligen Signals 107, 108 erzielen zu können.

Die Signalquelle 106 bzw. die beiden Lichtquellen 109 sind im Bereich der Zielscheibe 105 auf einem Führungsschlitten 182 der Stellvorrichtung 120 angeordnet. Die Stellvorrichtung 120 ist dabei wiederum von dem zuvor beschriebenen Richtsystem 117 bzw. von der zuvor beschriebenen Ortungsvorrichtung 119 bewegungsgesteuert. Insbesondere stellt diese Ausbildung wiederum eine Nachführvorrichtung 118 der Signalquelle 106 zur ortsungsgebundenen Empfangseinheit 114 dar.

Die Nachführvorrichtung 118 folgt den Bewegungen der Empfangseinheit 114 selbstverständlich nur dann, wenn die Signale 107, 108 nicht von der Empfangseinheit 114 empfangen werden können, d.h. wenn diese nicht auf dem Sensor 115 auftreffen, was beispielsweise durch eine von der vorgesehenen Standposition abweichenden Anvisierposition auftritt. Sobald die Nachführvorrichtung 118 die Lichtquelle 109 in den Empfangsbereich der Empfangseinheit 114 gelenkt hat, so wird diese selbstverständlich deaktiviert, um sodann die Relativbewegung der Empfangseinheit 114 bzw. der Waffe 103 relativ zur Zielscheibe 105 unverfälscht aufnehmen zu können. Die Nachführvorrichtung 118 ist also nur bis zur Auffindung der Empfangseinheit 114 und für die zuverlässige Signalzuordnung zur Empfangseinheit 114 bzw. nur zur Auffindung der Empfangseinheit 114 aktiv.

Über den Führungsschlitten 182 ist die Signalquelle 106 in der Ebene der Zielscheibe 105 verfahrbar. Dabei ist der Fühnmgsschlitten 82 ebenso um die Drehachse 124 translatorisch bewegbar. Auf dem Führungsschlitten 182 ist weiters eine zur Drehachse 124 senkrecht verlaufende Drehachse 123 angeordnet, um welche die Signalquelle 106 drehbar gelagert ist. Sämtliche von der Stellvorrichtung 120 ausführbaren translatorischen und/oder rotatorischen Bewegungen sind dabei entsprechend der Position der Empfangseinheit 114 vom Richtsystem 117 bzw. von der Ortungsvorrichtung 119 gesteuert, sodaß die Signale 107, 108 von der Empfangseinheit 114 zuverlässig empfangen und von der Vorrichtung 104 ausgewertet werden können. Durch die zuvor beschriebene Ausbildung der Stellvorrichtung 120 sind die Strahlen 107, 108 in beliebige Punkte im Raum lenkbar, sodaß der ordnungsgemäße Empfang derselben auch dann sichergestellt ist, auch wenn die Empfangseinheit Orts- und/oder Höhenveränderungen unterliegt.

Im dargestellten Ausführungsbeispiel ist die Signalquelle 106 unter anderem auch entlang einer geradlinigen Führungsbahn über den Führungsschlitten 182 der Stellvorrichtung 120 verstellbar gelagert.

Fig. 8 veranschaulicht über die Trainingsanlage 101 erhobene Daten eines Schützen bzw. Probanden in graphischer Form. Diese graphisch umgesetzten Daten können dabei über die in Fig. 5 dargestellte Ausgabevorrichtung 154, z.B. einem Bildschirm und/oder über die in den Fig. 6, 7 dargestellten Anzeigevorrichtungen 169 visualisiert werden. Selbstverständlich ist es auch möglich, diese Daten mittels einer Druckvorrichtung zu Papier zu bringen.

In dieser graphischen Datengegenüberstellung 199 sind Diagramme 200 bis 202 vorgesehen, welche das Eintreten verschiedenster Ereignisse E1 bis E3 wiedergeben. So veranschaulicht beispielsweise Diagramm 200 die Aktivierung der Vorrichtung 144 zum Erschrecken und/oder Ablenken des Schützen, insbesondere die Aktivierung zumindest eines Scheinwerfers 148 zu einem Zeitpunkt 203. Die Diagramme 201 und 202 veranschaulichen das Auftreten weiterer Ereignisse, insbesondere die Aktivierung der akustischen Ausgabevorrichtung 145, insbesondere zumindest eines Signalhorns 147 in etwa zu einem Zeitpunkt 204.

Das weitere Diagramm 202 veranschaulicht das Auftreten eines für den Schützen unvorhergesehenen Ereignisses, z.B. das Erscheinen einer sicherheitskritischen bzw. zu bekämpfenden Person, insbesondere eines Gegners oder eines Zivilisten zu Zeitpunkten 205 und 206. All diese Ereignisse in den Diagrammen 200 bis 202 können dabei kurzfristig auftreten, wie dies durch die impulsartigen Kurvenverläufe dargestellt ist oder aber auch über einen längeren Zeitraum andauem.

In den Diagrammen 207, 208 ist der Bewegungsablauf der vom Schützen geführten Waffe 103 graphisch veranschaulicht. Dabei führt der Schütze die Waffe 103 in etwa spiralförmig ins Zentrum bzw. an die Solltreffstelle der Zielscheibe 105. Das Diagramm 207 zeigt dabei die Höhenbewegungen der Waffe 103 während des Anvisiervorganges bis zum Auslösezeitpunkt 209 der Waffe 103 durch den Benutzer 102. Das Diagramm 208 hingegen zeigt die seitlichen Verfahrbewegungen der Waffe 103 während des Anvisiervorganges bis zum Auslösezeitpunkt 209 bzw. bis zur Aktivierung der Waffe 103. Auf der Ordinate ist dabei jeweils die Zeit t aufgetragen, wohingegen auf der Abszisse ein Maß für die Auslenkbewegung der Waffe 103 abzulesen ist. Die Höhe der Amplituden der Kurven 210, 211 in den Diagrammen 207, 208 ist also ein Maß für die Entfernung der Ist-Lage der Waffe relativ zur Soll-Treffstelle bzw. relativ zum Zentrumspunkt der Zielscheibe 105. Dabei ist aus den Diagrammen 207, 208 ersichtlich, daß mit fortlaufender Anvisierzeit die Abweichung von der Soll-Treffstelle abnimmt und zum Zeitpunkt 209 die Solltreffstelle bzw. der Zentrumspunkt der Zielscheibe 105 eingenommen wurde und die Aktivierung der Waffe 103 erfolgte.

Aus diesen Diagrammen 207, 208 ist aber auch eine Schrecksituation des Schützen ablesbar, wenn dieser ruckartige Waffenbewegungen durchführt und dies durch in strichlierten Linien dargestellte Kurvenimpulse 212, 213 festgehalten ist. Würden die Kurven 210, 211 den in strichlierten Linien dargestellten Kurvenverlauf während der Zeitpunkte 203, 204 einnehmen, so ist dies ein Anzeichen dafür, daß der Schütze durch die Aktivierung der Vorrichtung 144 erschrocken ist und dadurch die Waffe 103 verrissen hat. Es ist also beim Vorhandensein von stark abweichenden Impulsen 212, 213 belegt, daß der Schütze auf die ausgelösten Ereignisse entsprechend reagiert. Beim Auftreten unkritischer Ereignisse sollten idealerweise keine Impulse 212, 213 aufscheinen, wohingegen beim Auftreten sicherheitskritischer Ereignisse das Vorhandensein von derartigen Impulsen 212, 213 erwünscht ist. Im dargestellten Ausführungsbeispiel führte der Schütze während der Zeitpunkte 205, 206 keine Abwehrmaßnahmen beim Auftreten eines Gegners durch, was als nachteilig zu beurteilen ist. All diese Reaktionen des Schützen sind also mittels der Diagramme 207; 208 veranschaulicht und können zur Beurteilung der Leistungsfähigkeit eines Schützen herangezogen werden.

Gegebenenfalls können auch die von den Mitteln 153 zur Erfassung der Körperfunktionen bereitgestellten Daten ausgewertet und in der Datengegenüberstellung 199 veranschaulicht werden, wie dies in Diagramm 214 gezeigt ist. Im Diagramm 214 kann dabei der Blutdruck und/oder die Pulsfrequenz des Benutzers 102 bzw. des Schützen abgelesen werden. Aus Diagramm 214 ist dabei ersichtlich, daß beim Auftreten der Ereignisse zu den Zeitpunkten 203 und 204 die Pulsfrequenz und/oder der Blutdruck des Schützen 102 einen Spitzenwert 215 aufgewiesen hat bzw. über einem in strichlierten Linien dargestellten Mittelwert 210 gelegen ist. Mit der beschriebenen Einrichtung ist also eine Schrecksituation für den Schützen generierbar und detektierbar, ob diese zu einer abrupten Abweichbewegung der Waffe 103 oder sogar zu einer vorzeitigen Auslösung derselben führte oder ob der Schütze keine Reaktion beim Eintreten von diversen Ereignissen gezeigt hat.

Der Ordnung halber sei abschließend darauf hingewiesen, daß zum besseren Verständnis des Aufbaus der Trainingsanlage 101 bzw. der Vorrichtung 104 diese bzw. deren Bestandteile teilweise unmaßstäblich und/oder vergrößert und/oder verkleinert dargestellt wurden.

## Patentansprüche

1. Vorrichtung zur Ermittlung der räumlichen Lage und Bewegung einer Waffe (2), insbesondere Schußwaffe, mit einer Empfangseinheit (4) die auf der Waffe angeordnet und zum Empfang von zumindest zwei auf die Waffe zu gerichteten Strahlen (5,6) einer bevorzugt im Bereich einer Zielscheibe angeordneten Sendeeinheit (9) ausgebildet ist und durch einen zwei-dimensionalen positionsempfindlichen Sensor (10) gebildet ist, mit dem die Auftreffstelle (12,13) der aufeinanderfolgend einlangenden Strahlen auf einer Meßfläche (11) des Sensors über eine Auswerteeinheit in zwei senkrecht zueinander verlaufenden Raumrichtungen feststellbar ist, **dadurch gekennzeichnet, daß** zwischen dieser Meßfläche (11) und der Sendeeinheit (9) eine Optik (14), d.h. eine Linsenanordnung ausgebildet ist und die Auswerteeinheit (16) bevorzugt über ein Bussystem (24) und/oder ein Netzwerk (25) mit einem Personal-Computer (23) verbindbar ist und die Wellenlänge der Strahlen (5, 6) in einem für Menschen unsichtbaren Bereich liegt, wobei an der Empfangseinheit (4) durch die Lage der Auftreffstellen (12, 13) auf der Meßfläche (11) auch die Verkantung der Waffe (2) um deren Längsachse gegenüber der Zielscheibe (3) festgestellt ist und der Empfangseinheit (4, 114) eine Entfemungsmeßvorrichtung (125) zum Ermitteln der Distanz zwischen der Empfangseinheit (4, 114) und der Sendeeinheit (9) bzw. einer Signalquelle (106) zugeordnet ist.

2. Vorrichtung nach Anspruch 1, **dadurch gekennzeichnet, daß** die Meßfläche (11) ein lichtempfindliches Element (35) aufweist und in jeder Raumrichtung (31, 32) zwei voneinander distanzierte Elektroden (39, 40; 41, 42) aufweist, wobei der Stromfluß zwischen zwei in einer Raumrichtung voneinander distanzierten Elektroden (39, 40; 41, 42) und einer weiteren Elektrode (41, 42 oder 39, 40) für die andere Raumrichtung einer Distanz (48, 49; 46, 47) der Auftreffstelle (12, 13) von der jeweiligen Elektrode (39 bis 42) direkt proportional ist.

3. Vorrichtung nach Anspruch 2, **dadurch gekennzeichnet, daß** die Elektroden (39 bis 42) mit der Auswerteeinheit (16) zur Auswertung des Positionssignals von abwechselnd aufeinanderfolgend auftreffenden, unterschiedlichen Strahlen (5, 6) verbunden sind.

4. Vorrichtung nach einem oder mehreren der vorhergehenden Ansprüche, **dadurch gekennzeichnet, daß** die Strahlen (5, 6) durch Infrarotstrahlen gebildet sind.

5. Vorrichtung nach einem oder mehreren der vorhergehenden Ansprüche, **dadurch gekennzeichnet, daß** die Empfangseinheit (4) über eine insbesondere drahtlose Kommunikationsvorrichtung (17) mit der distanziert von der Waffe (2) angeordneten Auswerteeinheit (16) verbunden ist.

6. Vorrichtung nach einem oder mehreren der vorhergehenden Ansprüche, **dadurch gekennzeichnet, daß** die Empfangseinheit (4) und die Auswerteeinheit (16) eine gemeinsame, auf der Waffe (2) angeordnete Baueinheit bilden.

7. Vorrichtung nach einem oder mehreren der vorhergehenden Ansprüche, **dadurch gekennzeichnet, daß** ein Mikrofon (18) insbesondere zur Schußerkennung vorgesehen bzw. an die Empfangseinheit (4) angeschlossen ist.

8. Vorrichtung nach einem oder mehreren der vorhergehenden Ansprüche, **dadurch gekennzeichnet, daß** ein Drucksensor (19) für den Auslöser und/oder den Finger zum Auslösen der Waffe angeordnet bzw. an der Empfangseinheit (4) angeschlossen ist.

9. Vorrichtung nach einem oder mehreren der vorhergehenden Ansprüche, **dadurch gekennzeichnet, daß** der Empfangseinheit (4, 114) eine Ortungsvorrichtung (119) zum Ermitteln der Ist-Position der Empfangseinheit (4, 114) zugeordnet ist.

10. Vorrichtung nach Anspruch 9, **dadurch gekennzeichnet, daß** der Ortungsvorrichtung (119) eine Nachführvorrichtung (118) für die Sendeeinheit (9) der Strahlen (5, 6) bzw. für eine Signalquelle (106) der Signale (107, 108) zugeordnet ist, die eine Stellvorrichtung (120) zum Nachführen der Sendeeinheit (9) bzw. der Signalquelle (106) in die Ist-Position der Empfangseinheit (4, 114) aufweist.

11. Vorrichtung nach Anspruch 1 oder 10, **dadurch gekennzeichnet, daß** die Strahlen (5, 6) der Sendeeinheit (9) bzw. die Signale (107, 108) der Signalquelle (106) über eine Stellvorrichtung (120) so ausgerichtet sind, daß sie bei der mit der Entfemungsmeßvorrichtung (125) festgestellten Distanz zwischen Sendeeinheit (9) bzw. Signalquelle (106) und Empfangseinheit (4, 114) auf der Empfangseinheit (4, 114) auftreffen.

12. Vorrichtung nach einem oder mehreren der vorhergehenden Ansprüche, **dadurch gekennzeichnet, daß** die Auswerteeinheit (16, 167) zur zeitsynchronen Aufzeichnung der Signalabgabe und/oder -dauer von Vorrichtungen (144) zum Erschrecken und/oder Ablenken, insbesondere von Scheinwerfern (148), Signalhömem (147), Sirenen oder mit Lautsprechern abgegebener, Licht- und/oder Schallsignale ausgebildet ist.

13. Vorrichtung nach einem oder mehreren der vorhergehenden Ansprüche, **dadurch gekennzeichnet, daß** von der Empfangseinheit (4, 114) zeitsynchron zu einer insbesondere auf eine Leinwand (157) projizierten Zieldarstellung die Positionssignale von der Empfangseinheit (4, 114) aufzeichen- und/oder darstellbar sind.

14. Vorrichtung nach einem oder mehreren der vorhergehenden Ansprüche, **dadurch gekennzeichnet, daß** der Empfangseinheit (4, 114) eine Abschirmvorrichtung (161) zur Ausgrenzung von für die Empfangseinheit (4, 114) nicht bestimmten Strahlen (5, 6) bzw. Signalen (107, 108) oder Störstrahlungen zugeordnet ist.

15. Vorrichtung nach einem oder mehreren der vorhergehenden Ansprüche, **dadurch gekennzeichnet, daß** zwischen der Empfangseinheit (4, 114) und der Auswerteeinheit (16, 167) ein Filter zur Selektion der Charakteristik der eintreffenden Strahlen (5, 6) bzw. Signale (107, 108) angeordnet ist.

16. Vorrichtung nach Anspruch 14, **dadurch gekennzeichnet, daß** die Abschirmvorrichtung (161) durch eine Blende, insbesondere Lochblende (177) gebildet ist.

17. Vorrichtung nach einem oder mehreren der vorhergehenden Ansprüche, **dadurch gekennzeichnet, daß** der Empfangseinheit (4, 114) eine Verkantungsanzeige (173) zugeordnet ist und diese mit der Auswerteeinheit (16, 167) verbunden ist.

18. Vorrichtung nach Anspruch 17, **dadurch gekennzeichnet, daß** die Verkantungsanzeige (173) über eine drahtlose Kommunikationsvorrichtung mit der distanziert von der Empfangseinheit (4, 114) angeordneten Auswerteeinheit (16, 167) verbunden ist.

19. Vorrichtung nach Anspruch 17 oder 18, **dadurch gekennzeichnet, daß** die Verkantungsanzeige (173) mit optischen und/oder akustischen Ausgabevorrichtungen (174, 175) verbunden ist.

20. Vorrichtung nach einem der Ansprüche 1 bis 8, **dadurch gekennzeichnet, daß** die Auswerteeinheit (16) zur Beaufschlagung der Sendeeinheit (9) zur aufeinanderfolgenden Abgabe der Strahlen (5, 6) ausgebildet ist.

21. Vorrichtung nach Anspruch 20, **dadurch gekennzeichnet, daß** die Auswerteeinheit (16) mit einem Pulsmesser (20) verbunden ist.

22. Vorrichtung nach Anspruch 20 oder 21, **dadurch gekennzeichnet, daß** die Auswerteeinheit (16) mit einem Sensor (22) für die Gewichtsverteilung eines Benutzers der Waffe (2) auf der Aufstandsfläche verbunden ist.

23. Vorrichtung nach einem oder mehreren der vorhergehenden Ansprüche, **dadurch gekennzeichnet, daß** die Auswerteeinheit (16) bevorzugt über ein Bussystem (24) und/oder ein Netzwerk (25) mit einer Anzeigevorrichtung (26) im Bereich der Zielscheibe (3) oder des Standortes des Benutzers (21) der Waffe (2) verbunden ist.

24. Vorrichtung nach einem oder mehreren der vorhergehenden Ansprüche, **dadurch gekennzeichnet, daß** an der Auswerteeinheit (16) mehrere Empfangseinheiten (4) zur voneinander getrennten Auswertung der Positionssignale angeschlossen sind und die jeweiligen Positionssignale mit einer Codierung versehen sind.

25. Vorrichtung nach einem oder mehreren der vorhergehenden Ansprüche, **dadurch gekennzeichnet, daß** die Auswerteeinheit (16) die Sendeeinheit (9) zur Aussendung eines Strahles (5) über eine Zeitdauer von 2 ms bis 20 ms, bevorzugt 5 ms, und nach einer Pause von 2 ms bis 20 ms, bevorzugt 5 ms, zur Aussendung eines weiteren Strahles (6) von zumindest einem weiteren Sender (8) über eine Zeitdauer (29) von 2 ms bis 20 ms, bevorzugt 5 ms, ansteuert und nach Ablauf einer Zyklusdauer (34) von 20 ms bis 100 ms einen Zyklus zur wiederholenden Absendung der Strahlen (5, 6) auslöst.

26. Vorrichtung nach einem oder mehreren der vorhergehenden Ansprüche, **dadurch gekennzeichnet, daß** die Strahlen (5, 6) der Sendeeinheit (9) bzw. die Signale (107, 108) der Signalquelle (106) in einer gemeinsamen Ebene, insbesondere in einer Horizontal-oder Vertikalebene, verlaufen.

27. Vorrichtung nach einem oder mehreren der Ansprüche 1 bis 26, **dadurch gekennzeichnet, daß** die Wellenlänge und/oder Schwingungsrichtung der Strahlen (5, 6) von den Sendern (7, 8) bzw. der Signale (107, 108) von der Signalquelle (106) unterschiedlich ist.

28. Vorrichtung nach einem oder mehreren der Ansprüche 10 bis 27, **dadurch gekennzeichnet, daß** die Zielscheibe (3, 105) und die Sender (7, 8) der Sendeeinheit (9) bzw. die Signalquelle (106) auf einem gemeinsamen, mit der Stellvorrichtung (120) einstell- bzw. nachführbaren Traggestell angeordnet sind.

29. Vorrichtung nach einem oder mehreren der Ansprüche 10 bis 28, **dadurch gekennzeichnet, daß** die Stellvorrichtung (120) mehrere elektromotorische Antriebsvorrichtungen umfaßt, die eine Verschwenkung der Sender (7, 8) und/oder der Sendeeinheit (9) und/oder der Signalquelle (106) und/oder des Traggestells um mehrere, winkelig zueinander verlaufende Drehachsen (123, 124) ermöglicht.

30. Vorrichtung nach Anspruch 28 oder 29, **dadurch gekennzeichnet, daß** das Traggestell und/oder die Sender (7, 8) und/oder die Sendeeinheit (9) und/oder die Signalquelle (106) entlang einer geradlinigen Führungsbahn auf einem Führungsschlitten (182) der Stellvorrichtung (120) verstellbar gelagert ist.

31. Vorrichtung nach einem oder mehreren der vorhergehenden Ansprüche, **dadurch gekennzeichnet, daß** der Sendeeinheit (9) bzw. der Signalquelle (106) für den jeweiligen Entfernungsbereich zwischen Schützen und Zielscheibe (3, 105) eine bestimmte Aufstandsfläche zugeordnet ist.

32. Anlage zum Training des Gebrauchs und/oder der Handhabung von Waffen, insbesondere Schußwaffen, mit mehreren, insbesondere beweglichen, Zielen, **dadurch gekennzeichnet, daß** mehrere Vorrichtungen (1, 104) nach einem der Ansprüche 1 bis 31 angeordnet sind.

33. Anlage nach Anspruch 32, **dadurch gekennzeichnet, daß** mehreren Schießständen (127 bis 129) der Anlage eine gemeinsame Steuer- und/oder Auswertevorrichtung (140) zugeordnet ist.

34. Anlage nach Anspruch 32 oder 33, **dadurch gekennzeichnet, daß** jedem Schießstand (127 bis 129) eine eigene optische und/oder akustische Ausgabevorrichtung (154) zugeordnet ist.

35. Anlage nach einem oder mehreren der Ansprüche 32 bis 34, **dadurch gekennzeichnet, daß** die Auswerteeinheit (16, 167) und/oder die zentrale Steuer- und/oder Auswertevorrichtung (140) eine Eingabevorrichtung (155), insbesondere zum Voreinstellen der Distanz zwischen dem Schützen und der Zielscheibe (3, 105), enthält.

36. Anlage nach einem oder mehreren der Ansprüche 32 bis 35, **dadurch gekennzeichnet, daß** die Auswerteeinheit (16, 167) und/oder die zentrale Steuer- und/oder Auswertevorrichtung (140) Speichervorrichtungen (170) zum zeitsynchronen Aufzeichnen des Abgabezeitpunkts und/oder der Abgabedauer von Schrecksignalen, insbesondere Geräuschen und/oder Lichteffekten, aufweist.

37. Anlage nach einem oder mehreren der Ansprüche 32 bis 36, **dadurch gekennzeichnet, daß** die zentrale Steuer- und/oder Auswertevorrichtung (140) und/oder ein einem Schießstand (127 bis 129) zugeordneter Schießstandrechner (150 bis 152) mit einer Vorrichtung (144) zum Erschrecken und/oder Ablenken eines Benutzers (102) verbunden ist.

38. Anlage nach Anspruch 37, **dadurch gekennzeichnet, daß** der Vorrichtung (144) zum Erschrecken und/oder Ablenken eines Benutzers (102) eine Verstellvorrichtung (149) zur gesteuerten Lageveränderung der insbesondere durch akustische und/oder optische Ausgabevorrichtungen (145, 146) gebildeten Vorrichtung (144) zugeordnet ist.

39. Anlage nach einem oder mehreren der Ansprüche 32 bis 38, **dadurch gekennzeichnet, daß** ein Richtsystem (117) angeordnet ist, welches ein Positionserkennungssystem bzw. eine Ortungsvorrichtung (119) zum Feststellen der Ist-Lage der Empfangseinheit (4, 114) aufweist und mittels der Steuer- und/oder Auswertevorrichtung (140) zur Ansteuerung der Nachführvorrichtung (118) in die durch die Empfangseinheit (4, 114) vorgegebene Ist-Lage ausgebildet ist.

## Claims

1. Device for detecting the spatial position and movement of a weapon (2), in particular a fire-arm, with a receiver unit (4) disposed on the weapon for receiving at least two beams (5, 6) directed at the weapon from a transmitter unit (9) preferably arranged in the region of a target board and provided in the form of a two-dimensional position-sensitive sensor (10) by means of which the impact point (12, 13) of the beams arriving in succession on a measurement surface (11) of the sensor in two spatial directions running perpendicular to one another can be ascertained by means of an evaluation unit, **characterised in that** a lens (14), i.e. a lens arrangement, is provided between this measurement surface (11) and the transmitter unit (9), and the evaluation unit (16) can be connected to a personal computer (23), preferably via a bus system (24) and/or a network (25), and the wavelength of the beams (5, 6) lies within a range that is invisible to humans, and the tilt of the weapon (2) about its longitudinal axis relative to the target board (3) is also ascertained at the receiver unit (4) on the basis of the position of the impact points (12, 13) on the measurement surface (11) and a distance-measuring device (125) co-operates with the receiver unit (4, 114) in order to ascertain the distance between the receiver unit (4, 114) and the transmitter unit (9) and signal source (106).

2. Device as claimed in claim 1, **characterised in that** the measurement surface (11) has a light-sensitive element (35) and two electrodes (39, 40; 41, 42) spaced at a distance apart in each spatial direction (31, 32), whereby the flow of current between two electrodes (39, 40; 41, 42) spaced apart from one another in one spatial direction and another electrode (41, 42 or 39, 40) for the other spatial direction is directly proportional to a distance (48, 49; 46, 47) of the impact point (12, 13) from the respective electrode (39 to 42).

3. Device as claimed in claim 1 or 2, **characterised in that** the electrodes (39 to 42) are connected to the evaluation unit (16) for evaluating the position signal of different beams (5, 6) impacting alternately in succession.

4. Device as claimed in one or more of the preceding claims, **characterised in that** the beams (5, 6) are provided in the form of a infrared beams.

5. Device as claimed in one or more of the preceding claims, **characterised in that** the receiver unit (4) is connected to the evaluation unit (16) spaced at a distance apart from the weapon (2), in particular by means of a wireless communication system (17).

6. Device as claimed in one or more of the preceding claims, **characterised in that** the receiver unit (4) and the evaluation unit (16) are provided as a common unit on the weapon (2).

7. Device as claimed in one or more of the preceding claims, **characterised in that** a microphone (18), in particular for detecting firing, is provided and is connected to the receiver unit (4).

8. Device as claimed in one or more of the preceding claims, **characterised in that** a pressure sensor (19) for the trigger and/or the finger used to trigger the weapon is provided and is connected to the receiver unit (4).

9. Device as claimed in one or more of the preceding claims, **characterised in that** a locating device (119) for detecting the actual position of the receiver unit (4, 114) co-operates with the receiver unit (4, 114).

10. Device as claimed in claim 9, **characterised in that** the locating device (119) co-operates with a tracking device (118) for the transmitter unit (9) of the beams (5, 6) or for a signal source (106) of the signals (107, 108), having a positioning device (120) for displacing the transmitter unit (9) or the signal source (106) to the actual position of the receiver unit (4, 114).

11. Device as claimed in claim 1 or 10, **characterised in that** the beams (5, 6) of the transmitter unit (9) or the signals (107, 108) of the signal source (106) are so aligned by the positioning device (120) that they hit the receiver unit (4, 114) at the distance ascertained by the distance measuring device (125) between transmitter unit (9) or signal source (106) and receiver unit (4, 114).

12. Device as claimed in one or more of the preceding claims, **characterised in that** the evaluation unit (16, 167) is programmed to synchronise the recording timing of the signal output and/or duration from devices (144) for generating a panic and/or distraction, in particular optical and/or acoustic signals emitted from spotlights (148), horns (147), sirens or loudspeakers.

13. Device as claimed in one or more of the preceding claims, **characterised in that** the position signals from the receiver unit (4, 114) are timed in particular so that they can be recorded and/or presented by the receiver unit (4, 114) in synchronisation with a target presentation projected onto a canvas (157).

14. Device as claimed in one or more of the preceding claims, **characterised in that** the receiver unit (4, 114) co-operates with a screening device (161) for screening out beams (5, 6) or signals (107, 108) not intended for the receiver unit (4, 114) or interference signals.

15. Device as claimed in one or more of the preceding claims, **characterised in that** a filter is provided between the receiver unit (4, 114) and the evaluation unit (16, 167) to select the characteristics of the impacting beams (5, 6) or signals (107, 108).

16. Device as claimed in claim 14, **characterised in that** the screening device (161) is a screen, in particular a perforated screen (177).

17. Device as claimed in one or more of the preceding claims, **characterised in that** the receiver unit (4, 114) co-operates with a levelling display (173) connected to the evaluation unit (16, 167).

18. Device as claimed in claim 17, **characterised in that** the levelling display (173) is connected to the evaluation unit (16, 167) arranged at a distance apart from the receiver unit (4, 114) by means of a wireless communication system.

19. Device as claimed in claim 17 or 18, **characterised in that** the levelling display (173) is connected to optical and/or acoustic output devices (174, 175).

20. Device as claimed in one of claims 1 to 8, **characterised in that** the evaluation unit (16) is designed to emit beams (5, 6) consecutively in order to activate the transmitter unit (9).

21. Device as claimed in claim 20, **characterised in that** the evaluation unit (16) is connected to a pulse meter (20).

22. Device as claimed in claim 20 or 21, **characterised in that** the evaluation unit (16) is connected to a sensor (22) for detecting the weight distribution of a user of the weapon (2) on the standing surface.

23. Device as claimed in one or more of the preceding claims, **characterised in that** the evaluation unit (16) is connected preferably via a bus system (24) and/or a network (25) to a display device (26) in the region of the target (3) or the point where the user (21) of the weapon (2) is standing.

24. Device as claimed in one or more of the preceding claims, **characterised in that** several receiver units (4) are linked to the evaluation unit (16) to evaluate position signals spaced apart from one another and a code is applied to the respective position signals.

25. Device as claimed in one or more of the preceding claims, **characterised in that** the evaluation unit (16) activates the transmitter unit (9) to emit a beam (5) for a period of from 2 ms to 20 ms, preferably 5 ms, and, after a pause of from 2 ms to 20 ms, preferably 5 ms, to emit another beam (6) from at least one other transmitter (8) for a period (29) of from 2 ms to 20 ms, preferably 5 ms, and, after a cycle (34) of 20 ms to 100 ms triggers a cycle to repeat emission of the beams (5, 6).

26. Device as claimed in one or more of the preceding claims, **characterised in that** the beams (5, 6) of the transmitter unit (9) or the signals (107, 108) from the signal source (106) run in a common plane, in particular in a horizontal or vertical plane.

27. Device as claimed in one or more of claims 1 to 26, **characterised in that** the wavelength and/or the oscillation direction of the beams (5, 6) from the transmitters (7, 8) or the signals (107, 108) from the signal source (106) is different.

28. Device as claimed in one or more of claims 10 to 27, **characterised in that** the target (3, 105) and the transmitters (7, 8) of the transmitter unit (9) or the signal source (106) are on an adjustable or trackable common bearing frame with the positioning device (120).

29. Device as claimed in one or more of claims 10 to 28, **characterised in that** the positioning device (120) comprises several electric motor-driven actuators which enable the transmitters (7, 8) and/or the transmitter unit (9) and/or the signal source (106) and/or the bearing frame to be pivoted about several axes of rotation (123, 124) running at an angle relative to one another.

30. Device as claimed in claim 28 or 29, **characterised in that** the bearing frame and/or the transmitters (7, 8) and/or the transmitter unit (9) and/or the signal source (106) is mounted so as to be displaceable along a straight guide track on a guide carriage (182) of the positioning device (120).

31. Device as claimed in one or more of the preceding claims, **characterised in that** a specific standing surface is assigned to the transmitter unit (9) or the signal source (106) for the respective range between marksman and target (3, 105).

32. Unit for training in the use and/or handling of weapons, in particular fire-arms, having several, in particular moving, targets, **characterised in that** several devices (1, 104) as claimed in one of claims 1 to 31 are provided.

33. Unit as claimed in claim 32, **characterised in that** several firing ranges (127 to 129) of the unit are assigned to a common control and/or evaluation device (140).

34. Unit as claimed in claim 32 or 33, **characterised in that** each firing range (127 to 129) is assigned its own optical and/or acoustic output device (154).

35. Unit as claimed in one or more of claims 32 to 34, **characterised in that** the evaluation unit (16, 167) and/or the central control and/or evaluation unit (140) contains an input device (155), in particular for pre-setting the distance between the marksman and the target (3, 105).

36. Unit as claimed in one or more of claims 32 to 35, **characterised in that** the evaluation unit (16, 167) and/or the central control and evaluation unit (140) has memory devices (170) for synchronously timing recording of the output time and/or output duration of panic signals, in particular noises and/or lighting effects.

37. Unit as claimed in one or more of claims 32 to 36, **characterised in that** the central control and/or evaluation unit (140) and/or a firing range computer (150 to 152) assigned to a firing range (127 to 129) is connected to a device (144) for unnerving and/or distracting a user (102).

38. Unit as claimed in claim 37, **characterised in that** the device (144) for unnerving and/or distracting a user (102) is assigned a positioning device (149) for applying controlled changes of position of a device (144) consisting of acoustic and/or optical output devices (145, 146).

39. Unit as claimed in one or more of claims 32 to 38, **characterised in that** a guidance system (117) is provided, which has a position detection system or a locating device (119) for ascertaining the actual position of the receiver unit (4, 114) and is programmed by means of the control and/or evaluation device (140) to displace the tracking device (118) into the actual position predetermined by the receiver unit (4, 114).

## Revendications

1. Dispositif pour la détermination de la position spatiale et du mouvement d'une arme (2), en particulier d'une arme à feu, avec une unité de réception (4) qui est disposée sur l'arme et qui est réalisée pour recevoir au moins deux rayons (5,6) dirigés vers l'arme d'une unité d'émission (9) disposée de préférence dans la zone d'une cible et qui est formée par un capteur bidimensionnel (10) réagissant à la position, au moyen duquel peut être déterminé l'emplacement d'incidence (12,13) des rayons arrivant successivement sur une face de mesure (11) du capteur par une unité d'évaluation dans deux directions spatiales s'étendant perpendiculairement l'une à l'autre, **caractérisé en ce qu'**il est réalisé entre cette face de mesure (11) et l'unité d'émission (9) une optique (14), c'est-à-dire un agencement à lentille et que l'unité d'évaluation (16) peut être connectée de préférence par un système de bus (24) et/ou un réseau (25) à un ordinateur personnel (23) et que la longueur d'onde des rayons (5,6) se situe dans une plage invisible pour l'homme, où à l'unité de réception (4), par la position des emplacements d'incidence (12,13) sur la face de mesure (11), également le coincement de l'arme (2) autour de son axe longitudinal par rapport à la cible (3) est déterminé, et qu'il est associé à l'unité de réception (4,114) un dispositif de mesure de distance (125) pour déterminer la distance entre l'unlté de réception (4,114) et l'unité d'émission (9) respectivement une source de signaux (106).

2. Dispositif selon la revendication 1, **caractérisé en ce que** la face de mesure (11) présente un élément photosensible (35) et présente dans chaque direction spatiale (31,32) deux électrodes (39,40;41,42) espacées l'une de l'autre, où le flux de courant entre deux électrodes (39,40;41,42) espacées dans une direction spatiale l'une de l'autre et une autre électrode (41,42 ou 39,40) pour l'autre direction spatiale est directement proportionnelle à une distance (48,49;46,47) de l'emplacement d'incidence (12,13) de l'électrode respective (39 à 42).

3. Dispositif selon la revendication 2, **caractérisé en ce que** les électrodes (39 à 42) sont connectées à l'unité d'évaluation (16) pour évaluer le signal de position de rayons incidents différents (5,6) qui se font suite alternativement.

4. Dispositif selon l'une ou plusieurs des revendications précédentes, **caractérisé en ce que** les rayons (5,6) sont formés par des rayons infrarouges.

5. Dispositif selon l'une ou plusieurs des revendications précédentes, **caractérisé en ce que** l'unité de réception (4) est reliée par un dispositif de communication (17), en particulier sans fil, à l'unité d'évaluation (16) disposée à distance de l'arme (2).

6. Dispositif selon l'une ou plusieurs des revendications précédentes, **caractérisé en ce que** l'unité de réception (4) et l'unité d'évaluation (16) forment une unité de construction commune, disposée sur l'arme (2).

7. Dispositif selon l'une ou plusieurs des revendications précédentes, **caractérisé en ce qu'**un microphone (18), en particulier pour la détection du coup de feu, est prévu respectivement relié à l'unité de réception (4).

8. Dispositif selon l'une ou plusieurs des revendications précédentes, **caractérisé en ce qu'**un capteur de pression (19) pour la gâchette et/ou le doigt pour déclencher l'arme est disposé respectivement connecté à l'unité de réception (4).

9. Dispositif selon l'une ou plusieurs des revendications précédentes, **caractérisé en ce qu'**est associé à l'unité de réception (4,114) un dispositif de repérage (119) pour déterminer la position réelle de l'unité de réception (4,114).

10. Dispositif selon la revendication 9, **caractérisé en ce qu'**est associé au dispositif de repérage (119) un dispositif de poursuite (118) pour l'unité d'émission (9) des rayons (5,6) respectivement pour une source (106) des signaux (107,108) qui présente un dispositif de positionnement (120) pour l'amenée de l'unité d'émission (9) respectivement de la source de signaux (106) dans la position réelle de l'unité de réception (4,114).

11. Dispositif selon la revendication 1 ou 10, **caractérisé en ce que** les rayons (5,6) de l'unité d'émission (9) respectivement les signaux (107,108) de la source de signaux (106) sont orientés par un dispositif de positionnement (120) de façon qu'à la distance constatée par le dispositif de mesure de distance (125) entre l'unité d'émission (9) respectivement la source de signaux (106) et l'unité de réception (4,114) ils sont incidents sur l'unité de réception (4,114).

12. Dispositif selon l'une ou plusieurs des revendications précédentes, **caractérisé en ce que** l'unité d'évaluation (16,167) est réalisée pour l'enregistrement synchrone dans le temps de l'émission et/ou durée de signaux de dispositifs (144) pour effrayer et/ou dévier, en particulier des signaux lumineux et/ou sonores émis par des phares (148), des klaxons (147), des sirènes ou avec des haut-parleurs.

13. Dispositif selon l'une ou plusieurs des revendications précédentes, **caractérisé en ce que** par l'unité de réception (4,114), d'une manière synchrone dans le temps avec une représentation de cibles projetées sur un écran (157), les signaux de position peuvent être enregistrés et/ou représentés par l'unité de réception (4,114).

14. Dispositif selon l'une ou plusieurs des revendications précédentes, **caractérisé en ce qu'**est associé à l'unité de réception (4,114) un dispositif formant écran (161) pour l'élimination de rayons (5,6) respectivement de signaux (107,108) ou de rayons parasites non prévus pour l'unité de réception (4,114).

15. Dispositif selon l'une ou plusieurs des revendications précédentes, **caractérisé en ce qu'**est disposé entre l'unité de réception (4,114) et l'unité d'évaluation (16,167) un filtre pour la sélection de la caractéristique des rayons incidents (5,6) respectivement des signaux (107,108).

16. Dispositif selon la revendication 14, **caractérisé en ce que** le dispositif formant écran (161) est formé par un diaphragme, en particulier un diaphragme à trou (177).

17. Dispositif selon l'une ou plusieurs des revendications précédentes, **caractérisé en ce qu'**est associée à l'unité de réception (4,114) une indication de coincement (173), et celle-ci est reliée à l'unité d'évaluation (16,167).

18. Dispositif selon la revendication 17, **caractérisé en ce que** l'indication de coincement (173) est reliée par un dispositif de communication sans fil à l'unité d'évaluation (16,167) disposée à distance de l'unité de réception (4,114).

19. Dispositif selon la revendication 17 ou 18, **caractérisé en ce que** l'indication de coincement (173) est reliée à des dispositifs d'émission optiques ou acoustiques (174,175).

20. Dispositif selon l'une des revendications 1 à 8, **caractérisé en ce que** l'unité d'évaluation (16) est réalisée pour charger l'unité d'émission (9) en vue de l'émission successive des rayons (5,6).

21. Dispositif selon la revendication 20, **caractérisé en ce que** l'unité d'évaluation (16) est reliée à un appareil de mesure des pulsations (20).

22. Dispositif selon la revendication 20 ou 21, **caractérisé en ce que** l'unité d'évaluation (16) est reliée à un capteur (22) pour la répartition du poids d'un utilisateur de l'arme (2) sur la face d'appui.

23. Dispositif selon l'une ou plusieurs des revendications précédentes, **caractérisé en ce que** l'unité d'évaluation (16) est reliée de préférence par un système de bus (24) et/ou un réseau (25) à un dispositif d'affichage (26) dans la zone de la cible (3) ou de l'emplacement de l'utilisateur (21) de l'arme (2).

24. Dispositif selon l'une ou plusieurs des revendications précédentes, **caractérisé en ce que** sont connectés à l'unité d'évaluation (16) plusieurs unités de réception (4) pour l'évaluation séparée des signaux de position et que les signaux de position respectifs sont pourvus d'un codage.

25. Dispositif selon l'une ou plusieurs des revendications précédentes, **caractérisé en ce que** l'unité d'évaluation (16) commande l'unité d'émission (9) pour l'émission d'un rayon (5) sur une durée de 2 ms à 20 ms, de préférence de 5 ms, et après une pause de 2 ms à 20 ms, de préférence de 5 ms, pour l'émission d'un autre rayon (6) à partir d'au moins un autre émetteur (8) sur une durée (29) de 2 ms à 20 ms, de préférence de 5 ms et, après l'écoulement d'une durée de cycle (34) de 20 ms à 100 ms, déclenche un cycle pour l'émission répétée des rayons (5,6).

26. Dispositif selon l'une ou plusieurs des revendications précédentes, **caractérisé en ce que** les rayons (5,6) de l'unité d'émission (9) respectivement les signaux (107,108) de la source de signaux (106) s'étendent dans un plan commun, en particulier dans un plan horizontal ou vertical.

27. Dispositif selon l'une ou plusieurs des revendications 1 à 26, **caractérisé en ce que** la longueur d'onde et/ou la direction d'oscillation des rayons (5,6) des émetteurs (7,8) respectivement des signaux (107,108) de la source de signaux (106) est différente.

28. Dispositif selon l'une ou plusieurs des revendications 10 à 27, **caractérisé en ce que** la cible (3,105) et les émetteurs (7,8) de l'unité d'émission (9) respectivement la source de signaux (106) sont disposés sur un bâti de support commun, réglable respectivement pouvant être soumis à un mouvement de poursuite avec le dispositif de positionnement (120).

29. Dispositif selon l'une ou plusieurs des revendications 10 à 28, **caractérisé en ce que** le dispositif de positionnement (120) comprend plusieurs dispositifs d'entraînement électromoteurs qui permettent un pivotement des émetteurs (7,8) et/ou de l'unité d'émission (9) et/ou de la source de signaux (106) et/ou du châssis de support autour de plusieurs axes de rotation (123,124) s'étendant angulairement les uns aux autres.

30. Dispositif selon la revendication 28 ou 29, **caractérisé en ce que** le châssis de support et/ou les émetteurs (7,8) et/ou l'unité d'émission (9) et/ou la source de signaux (106) est logé d'une manière déplaçable le long d'une voie de guidage rectiligne sur un chariot de guidage (182) du dispositif de positionnement (120).

31. Dispositif selon l'une ou plusieurs des revendications précédentes, **caractérisé en ce qu'**une face d'appui déterminée est associée à l'unité d'émission (9) respectivement à la source de signaux (106) pour la zone de distance respective entre le tireur et la cible (3,105).

32. Installation pour s'entraîner à utiliser et/ou à manipuler des armes, en particulier des armes à feu, avec plusieurs cibles, en particulier mobiles, **caractérisée en ce que** sont prévus plusieurs dispositifs (1,104) selon l'une des revendications 1 à 31.

33. Installation selon la revendication 32, **caractérisée en ce qu'**un dispositif de commande et/ou d'évaluation commun (140) est associé à plusieurs stands de tir (127 à 129) de l'installation.

34. Installation selon la revendication 32 ou 33, **caractérisée en ce qu'**un dispositif d'émission optique et/ou acoustique propre (154) est associé à chaque stand de tir (127 à 129).

35. Installation selon l'une ou plusieurs des revendications 32 à 34, **caractérisée en ce que** l'unité d'évaluation (16,167) et/ou le dispositif de commande et/ou d'évaluation central (140) comprend un dispositif d'entrée (155) en particulier pour prérégler la distance entre le tireur et la cible (3,105).

36. Installation selon l'une ou plusieurs des revendications 32 à 35, **caractérisée en ce que** l'unité d'évaluation (16,167) et/ou le dispositif de commande et/ou d'évaluation central (140) présente des dispositifs de stockage (170) pour l'enregistrement synchrone dans le temps du moment d'émission et/ou de la durée d'émission de signaux de réaction, en particulier de bruits et/ou d'effets de lumière.

37. Installation selon l'une ou plusieurs des revendications 32 à 36, **caractérisée en ce que** le dispositif de commande et/ou d'évaluation central (140) et/ou un calculateur de stand de tir (150 à 152) associé à un stand de tir (127 à 129) est relié à un dispositif (144) pour effrayer et/ou détourner l'attention d'un utilisateur (102).

38. Installation selon la revendication 37, **caractérisée en ce qu'**est associé au dispositif (144) pour effrayer et/ou détourner l'attention d'un utilisateur (102) un dispositif de déplacement (149) pour une modification commandée de la position du dispositif (144) formé en particulier par des dispositifs d'émission acoustiques et/ou optiques (145,146).

39. Installation selon l'une ou plusieurs des revendications 32 à 38, **caractérisée en ce qu'**un système de direction (117) est disposé qui présente un système de détection de position respectivement un dispositif de repérage (119) pour constater la position réelle de l'unité de réception (4,114) et est réalisé au moyen du dispositif de commande et/ou d'évaluation (140) pour commander le dispositif de poursuite (118) dans la position réelle prédéterminée par l'unité de réception (4,114).
